(19) Europäisches Patentamt
European Patent Office
Office européen des brevets

(11) **EP 4 131 477 A1**

(12) **EUROPEAN PATENT APPLICATION**
published in accordance with Art. 153(4) EPC

(43) Date of publication:
**08.02.2023 Bulletin 2023/06**

(21) Application number: **21774547.0**

(22) Date of filing: **24.03.2021**

(51) International Patent Classification (IPC):
***H01M 4/134*** *(2010.01)* ***H01M 4/1395*** *(2010.01)*
***H01M 4/38*** *(1974.07)* ***H01M 4/62*** *(1974.07)*
***H01M 10/052*** *(2010.01)* ***H01M 10/0562*** *(2010.01)*

(52) Cooperative Patent Classification (CPC):
**H01M 4/134; H01M 4/1395; H01M 4/38; H01M 4/62; H01M 10/052; H01M 10/0562**

(86) International application number:
**PCT/JP2021/012346**

(87) International publication number:
**WO 2021/193751 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.03.2020 JP 2020055342**

(71) Applicant: **FUJIFILM Corporation**
**Tokyo 106-8620 (JP)**

(72) Inventors:
- **KUSHIDA, Yo**
  **Ashigarakami-gun, Kanagawa 258-8577 (JP)**
- **MOCHIZUKI, Hiroaki**
  **Ashigarakami-gun, Kanagawa 258-8577 (JP)**
- **YASUDA, Koji**
  **Ashigarakami-gun, Kanagawa 258-8577 (JP)**

(74) Representative: **HGF**
**HGF Limited**
**1 City Walk**
**Leeds LS11 9DX (GB)**

(54) **ELECTRODE COMPOSITION, ELECTRODE SHEET FOR ALL-SOLID-STATE SECONDARY BATTERY AND ALL-SOLID-STATE SECONDARY BATTERY, AND METHODS FOR MANUFACTURING ELECTRODE SHEET FOR ALL-SOLID-STATE SECONDARY BATTERY AND ALL-SOLID-STATE SECONDARY BATTERY**

(57) There is provided an electrode composition containing a sulfide-based inorganic solid electrolyte, a polymer binder, an active material having a specific surface area of 10 $m^2/g$ or more, and a dispersion medium, in which a polymer that forms the polymer binder has a constitutional component derived from a (meth)acrylic monomer or vinyl monomer, which has an SP value of 19.0 $MPa^{1/2}$ or more. There also provided an electrode sheet for all-solid state secondary battery and an all-solid state secondary battery, and manufacturing methods for an electrode sheet for an all-solid state secondary battery and an all-solid state secondary battery, in which the electrode composition is used.

FIG. 1

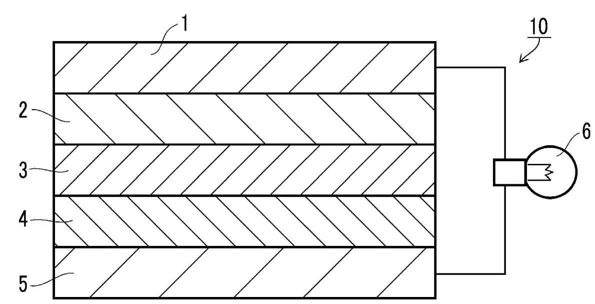


EP 4 131 477 A1

**Description**

**BACKGROUND OF THE INVENTION**

1. Field of the Invention

The present invention relates to an electrode composition, an electrode sheet for an all-solid state secondary battery, and an all-solid state secondary battery, and manufacturing methods for an electrode sheet for an all-solid state secondary battery and an all-solid state secondary battery

2. Description of the Background Art

In an all-solid state secondary battery, all of a negative electrode, an electrolyte, and a positive electrode consist of solid, and the all-solid state secondary battery can greatly improve safety and reliability, which are said to be problems to be solved in a battery in which an organic electrolytic solution is used. It is also said to be capable of extending the battery life. Furthermore, all-solid state secondary batteries can be provided with a structure in which the electrodes and the electrolyte are directly disposed in series. As a result, it becomes possible to increase the energy density to be high as compared with a secondary battery in which an organic electrolytic solution is used, and thus the application to electric vehicles, large-sized storage batteries, and the like is anticipated.

The constitutional layers (a solid electrolyte layer, a negative electrode active material layer, a positive electrode active material layer, and the like) of such an all-solid state secondary battery are formed of solid particles (an inorganic solid electrolyte, an active material, a conductive auxiliary agent, and the like). As a result, the interfacial contact state between the solid particles is restricted, and the interface resistance tends to increase (the ion conductivity decreases). Moreover, in a case where repeatedly charged and discharged, voids are generated between the solid particles, which causes an increase in interface resistance and causes a deterioration in the cycle characteristics of an all-solid state secondary battery.

In response to such an increase in interface resistance, it is expected to use a sulfide-based inorganic solid electrolyte that exhibits high ion conductivity, which is comparable to that of an organic electrolytic solution, among inorganic solid electrolytes. In addition, it has also been reported that an active material having a large specific surface area can suppress an increase in interface resistance and, consequently, can improve the cycle characteristics of an all-solid state secondary battery. As a material (an active material layer forming material) that forms a constitutional layer of an all-solid state secondary battery, using such a sulfide-based inorganic solid electrolyte and an active material having a large specific surface area, for example, JP2019-186212A describes a mixed powder (Comparative Example 1) containing 45.7% by mass of Si spherical particle powder having a specific surface area of 20 $m^2/g$ as a negative electrode active material, 45.7% by mass of a sulfide-based inorganic solid electrolyte, and 5% by mass of acetylene black as a conductive auxiliary agent.

**SUMMARY OF THE INVENTION**

However, as a result of studies by the inventors of the present invention, it was found that a new problem arises in a case where the specific surface area of an active material is increased in an active material layer forming material containing a sulfide-based inorganic solid electrolyte and an active material.

That is, in a case where the specific surface area of an active material that is difficult to be dispersed in a dispersion medium is increased, the dispersibility of the active material immediately after preparation is further decreased, and in addition, the characteristic (the dispersion stability) of stably maintaining the dispersibility immediately after preparation also deteriorate significantly. Further, as the surface area of the active material is increased, the interfacial contact state with not only other solid particles but also the collector is remarkably restricted, and thus the adhesion to these is also reduced.

As described above, although the active material itself having a large specific surface area is promising as a material capable of suppressing an increase in interface resistance, no study was carried out in JP2019-186212A from the above viewpoint. As a result, it was found that it is important to solve the above problems in order to realize an all-solid state secondary battery that exhibits excellent battery performance by fully utilizing the characteristics of an active material having a large specific surface area.

An object of the present invention is to provide an electrode composition that exhibits excellent dispersion stability while containing an active material having a large specific surface area, where the electrode composition is capable of forming an electrode layer (an active material layer) that realizes excellent cycle characteristics as well while exhibiting strong adhesion to a collector. In addition, another object of the present invention is to provide an electrode sheet for an all-solid state secondary battery and an all-solid state secondary battery, and manufacturing methods for

an electrode sheet for an all-solid state secondary battery and an all-solid state secondary battery, in which the above electrode composition is used.

As a result of continuing studies on the electrode composition, the inventors of the present invention found that in the presence of a sulfide-based inorganic solid electrolyte, in a case of using a binder consisting of a polymer having a constitutional component derived from a (meth)acrylic monomer or the like having an SP value of 19.0 $MPa^{1/2}$ or more, in combination with an active material having a specific surface area of 10 $m^2/g$ or more, it is possible to suppress temporal reaggregation or sedimentation, and it is possible to maintain excellent dispersibility immediately after preparation even in a case of an active material having a large specific surface area of 10 $m^2/g$ or more. In addition, it was also found that in a case of using this electrode composition as an active material layer forming material, it is possible to realize an all-solid state secondary battery in which a strong adhesion to a collector is exhibited and the decrease in discharge capacity due to charging and discharging is effectively suppressed (which exhibits excellent cycle characteristics). The present invention has been completed through further studies based on these findings.

That is, the above problems have been solved by the following means.

<1> An electrode composition for an all-solid state secondary battery, comprising:

a sulfide-based inorganic solid electrolyte having an ion conductivity of a metal belonging to Group 1 or Group 2 in the periodic table;
a polymer binder;
an active material; and
a dispersion medium,
in which the active material has a specific surface area of 10 $m^2/g$ or more, and
a polymer that forms the polymer binder has a constitutional component derived from a (meth)acrylic monomer or vinyl monomer, which has an SP value of 19.0 $MPa^{1/2}$ or more.

<2> The electrode composition according to <1>, in which the polymer binder is dissolved in the dispersion medium.
<3> The electrode composition according to <1> or <2>, in which the active material has a silicon element as a constitutional element.
<4> The electrode composition according to any one of <1> to <3>, in which the constitutional component has a polar group containing active hydrogen, or a heterocyclic group.
<5> The electrode composition according to any one of <1> to <4> in which the constitutional component has a structure represented by Formula (M1) or Formula (M2),

Formula (M1)

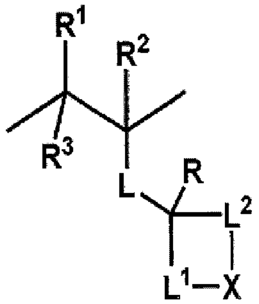

Formula (M2)

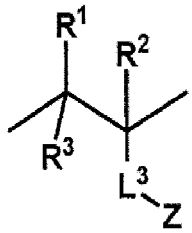

in Formula (M1) and Formula (M2), R, $R^1$, $R^2$, and $R^3$ represent a hydrogen atom or a substituent,

L represents a linking group, $L^1$, $L^2$, and $L^3$ represent a single bond or a linking group,
X represents -O-, -S-, or $-NR^M-$, where $R^M$ represents a hydrogen atom or a substituent, and
Z represents -OH or -COOH.

<6> The electrode composition according to any one of <1> to <5> in which a polymer that forms the polymer binder is a (meth)acrylic polymer or a vinyl polymer.
<7> The electrode composition according to any one of <1> to <6>, further comprising a conductive auxiliary agent.
<8> An electrode sheet for an all-solid state secondary battery, comprising a layer formed of the electrode composition according to any one of <1> to <7>, on a surface of a collector.
<9> An all-solid state secondary battery comprising, in the following order, a positive electrode active material layer;

a solid electrolyte layer; and a negative electrode active material layer,
in which at least one layer of the positive electrode active material layer or the negative electrode active material layer is formed of the electrode composition according to any one of <1> to <7>.
<10> A manufacturing method for an electrode sheet for an all-solid state secondary battery, comprising forming a film of the electrode composition according to any one of <1> to <7>, on a surface of a collector.
<11> A manufacturing method for an all-solid state secondary battery, comprising manufacturing an all-solid state secondary battery through the manufacturing method according to <10>.

According to the present invention, it is possible to provide an electrode composition that can form an electrode layer that exhibits excellent dispersion stability while containing an active material having a large specific surface area and is capable of realizing excellent cycle characteristics while exhibiting strong adhesion to a collector. In addition, according to the present invention, it is possible to provide an electrode sheet for an all-solid state secondary battery and an all-solid state secondary battery, which have an electrode layer formed of the above electrode composition. Further, according to the present invention, it is possible to provide manufacturing methods for an electrode sheet for an all-solid state secondary battery and an all-solid state secondary battery, in which the above electrode composition is used.
The above-described and other characteristics and advantages of the present invention will be further clarified by the following description with appropriate reference to the accompanying drawing.

## BRIEF DESCRIPTION OF THE DRAWINGS

Fig. 1 is a vertical cross-sectional view schematically illustrating an all-solid state secondary battery according to a preferred embodiment of the present invention.
Fig. 2 is a vertical cross-sectional view schematically illustrating a coin-type all-solid state secondary battery prepared in Examples.

## DESCRIPTION OF THE PREFERRED EMBODIMENTS

In the present invention, numerical ranges indicated using "to" mean ranges including numerical values before and after the "to" as the lower limit value and the upper limit value.
In the present invention, the expression of a compound (for example, in a case where a compound is represented by an expression in which "compound" is attached to the end) refers to not only the compound itself but also a salt or an ion thereof. In addition, this expression also refers to a derivative obtained by modifying a part of the compound, for example, by introducing a substituent into the compound within a range where the effects of the present invention are not impaired.
In the present invention, (meth)acryl means one or both of acryl and methacryl. The same applies to (meth)acrylate.
In the present invention, a substituent, a linking group, or the like (hereinafter, referred to as a substituent or the like), which is not specified regarding whether to be substituted or unsubstituted, may have an appropriate substituent. Accordingly, even in a case where a YYY group is simply described in the present invention, this YYY group includes not only an aspect having a substituent but also an aspect not having a substituent. The same shall be applied to a compound that is not specified in the present specification regarding whether to be substituted or unsubstituted. Examples of the preferred examples of the substituent T include a substituent described below.
In the present invention, in a case where a plurality of substituents or the like represented by a specific reference numeral are present or a plurality of substituents or the like are simultaneously or alternatively defined, the respective substituents or the like may be the same or different from each other. In addition, unless specified otherwise, in a case where a plurality of substituents or the like are adjacent to each other, the substituents may be linked or fused to each other to form a ring.
In the present invention, the polymer means a polymer; however, it is synonymous with a so-called polymeric compound. Further, a polymer binder means a binder constituted of a polymer and includes a polymer itself and a binder formed by containing a polymer.
In the present invention, a composition containing an active material and used as a material (an active material layer forming material) that forms an active material layer of an all-solid state secondary battery is referred to as an electrode composition. On the other hand, a composition containing a sulfide-based inorganic solid electrolyte and used as a solid electrolyte layer forming material of an all-solid state secondary battery is referred to as a (sulfide-based) inorganic solid electrolyte-containing composition, where this composition generally does not contain an active material.

In the present invention, the electrode composition includes a positive electrode composition containing a positive electrode active material and a negative electrode composition containing a negative electrode active material. For this reason, any one of the positive electrode composition and the negative electrode composition or both of them may be collectively referred to simply as an electrode composition. In addition, in the present invention, any one of the positive electrode active material layer and the negative electrode active material layer, or collectively both of them may be simply referred to as an active material layer or an electrode active material layer, and any one of the positive electrode active material and the negative electrode active material, or collectively both of them may be simply referred to as an active material or an electrode active material.

[Electrode composition]

An electrode composition according to the embodiment of the present invention contains a sulfide-based inorganic solid electrolyte having an ion conductivity of a metal belonging to Group 1 or Group 2 in the periodic table, a polymer binder, an active material, and a dispersion medium.
In this electrode composition, the polymer binder is preferably adsorbed to the active material in terms of initial dispersibility and dispersion stability (collectively referred to as dispersion characteristics) immediately after the preparation of the electrode composition (particularly the active material); however, it may be or may not be adsorbed to the sulfide-based inorganic solid electrolyte. The electrode composition according to the embodiment of the present invention is preferably a slurry in which an active material as well as a sulfide-based inorganic solid electrolyte is dispersed in a dispersion medium. In this case, the polymer binder preferably has a function of dispersing solid particles in the dispersion medium.
The polymer binder functions in the active material layer as a binder that binds solid particles such as an active material, a sulfide-based inorganic solid electrolyte, and a co-existable conductive auxiliary agent. Further, it also functions as a binder that binds a collector to solid particles. In the electrode composition, the polymer binder may have or may not have a function of causing solid particles to mutually bind therebetween.
The electrode composition according to the embodiment of the present invention is excellent in dispersion stability while containing an active material having a large specific surface area. In a case of using this electrode composition as an active material layer forming material, it is possible to realize an electrode sheet for an all-solid state secondary battery, having, on a surface of the collector, an active material layer capable of realizing excellent cycle characteristics as well while exhibiting strong binding force (adhesion) to a collector, as well as an all-solid state secondary battery having excellent cycle characteristics.
Although the details of the reason for the above are not yet clear, they are conceived to be as follows. That is, in an active material layer containing an active material having a large specific surface area of 10 $m^2/g$ or more, a large number of conduction paths of lithium ions by the active material are constructed. Therefore, even in a case where some conduction paths are blocked (collapsed) by repeated charging and discharging, most of the remaining conduction paths are connected. Moreover, it is conceived that the collapse of the conduction path can be suppressed even in a case where high-speed charging and discharging at a large current is repeated, in order to meet the recent high-level demands for an all-solid state secondary battery.
On the other hand, it is conceived that in the electrode composition, the interaction between a constitutional component of a polymer binder, derived from a specific monomer having an SP value of 19.0 $MPa^{1/2}$ or more, and the surface (generally, having an oxidized site having high polarity) of an active material is strengthened. As a result, the adsorption of this polymer to the active material in the electrode composition is accelerated, the polymer binder can be highly dispersed (is excellent in initial dispersibility) even in a case of an active material having a large specific surface area of 10 $m^2/g$ or more, and the temporal reaggregation or sedimentation can be suppressed (excellent dispersion stability is exhibited).
In addition, it is conceived that the above-described adsorption state is maintained even in the active material layer, and each component is less likely to be unevenly distributed in the active material layer, and sufficient contact (adhesion) of the polymer binder with the collector can be ensured. This makes it possible to strengthen not only the adhesion between the active materials but also the adhesion to the collector. As a result, in high-speed charging and discharging with a large current in addition to charging and discharging under normal conditions, the generation of voids due to expansion and contraction of the active material is also effectively suppressed, and excellent cycle characteristics can be realized.
In the present invention, the above-described interaction is not particularly limited as long as the polymer binder is adsorbed to the active material, and it may be a chemical interaction or a physical interaction.
Although the details of the reasons have been described focusing on the active material having a large specific surface area and the polymer binder, it is conceived that the influence of solid particles (the sulfide-based inorganic solid electrolyte, the conductive auxiliary agent, and the like) existing together with the active material, such as the deterioration of dispersion stability and adhesiveness is small, and it is conceived that the polymer binder functions on these solid

particles in the same manner as the active material and exhibits the above-described action and effect.

Due to having excellent characteristics described above, the electrode composition according to the embodiment of the present invention can be preferably used as an active material layer forming material of an electrode sheet for an all-solid state secondary battery or an all-solid state secondary battery. In particular, it can be preferably used as a material for forming a negative electrode sheet for an all-solid state secondary battery or a material for forming a negative electrode active material layer, which contains a negative electrode active material having a large expansion and contraction due to charging and discharging, and excellent cycle characteristics can be achieved in this aspect as well.

The electrode composition according to the embodiment of the present invention is preferably a non-aqueous composition. In the present invention, the non-aqueous composition includes not only an aspect including no moisture but also an aspect where the moisture content (also referred to as the "water content") is preferably 500 ppm or less. In the non-aqueous composition, the moisture content is more preferably 200 ppm or less, still more preferably 100 ppm or less, and particularly preferably 50 ppm or less. In a case where the electrode composition is a non-aqueous composition, it is possible to suppress the deterioration of the sulfide-based inorganic solid electrolyte. The water content refers to the amount of water (the mass ratio thereof to the electrode composition) in the electrode composition and specifically is a value measured by Karl Fischer titration after filtering the solid electrolyte composition through a membrane filter having a pore size of 0.02 $\mu$m.

Hereinafter, the components that are included in the electrode composition according to the embodiment of the present invention and components that may be included therein will be described.

<Sulfide-based inorganic solid electrolyte>

The electrode composition of the embodiment of the present invention contains the sulfide-based inorganic solid electrolyte. Since the electrode composition contains a sulfide-based inorganic solid electrolyte, the formed electrode active material layer has excellent deformability, and the contact area between solid particles such as the sulfide-based inorganic solid electrolyte and the active material in the layer, and the contact area between the collector and the electrode active material layer can be increased. Therefore, in a case of a sulfide-based inorganic solid electrolyte is used, it is possible to increase the number of ion conduction paths constructed in the electrode active material layer and between the collectors, and further, an effect of accelerating the construction of ion conduction paths is exhibited in a case where an active material having a low specific surface area is used.

In the present invention, the inorganic solid electrolyte is an inorganic solid electrolyte, where the solid electrolyte refers to a solid-form electrolyte capable of migrating ions therein. The inorganic solid electrolyte is clearly distinguished from the organic solid electrolyte (the polymeric electrolyte such as polyethylene oxide (PEO) or the organic electrolyte salt such as lithium bis(trifluoromethanesulfonyl)imide (LiTFSI)) since it does not include any organic substance as a principal ion-conductive material. In addition, the inorganic solid electrolyte is solid in a steady state and thus, typically, is not dissociated or liberated into cations and anions. Due to this fact, the inorganic solid electrolyte is also clearly distinguished from inorganic electrolyte salts of which cations and anions are dissociated or liberated in electrolytic solutions or polymers ($LiPF_6$, $LiBF_4$, lithium bis(fluorosulfonyl)imide (LiFSI), LiCl, and the like). The sulfide-based inorganic solid electrolyte is not particularly limited as long as it has an ion conductivity of a metal belonging to Group 1 or Group 2 in the periodic table and generally does not have electron conductivity. In a case where the all-solid state secondary battery according to the embodiment of the present invention is a lithium ion battery, the sulfide-based inorganic solid electrolyte preferably has an lithium ion conductivity.

As the sulfide-based inorganic solid electrolyte, a sulfide-based inorganic solid electrolyte material that is typically used for an all-solid state secondary battery can be appropriately selected and used.

The sulfide-based inorganic solid electrolyte is preferably an electrolyte that contains a sulfur atom, has an ion conductivity of a metal belonging to Group 1 or Group 2 in the periodic table, and has electron-insulating properties. The sulfide-based inorganic solid electrolytes are preferably inorganic solid electrolytes which, as elements, contain at least Li, S, and P and have an lithium ion conductivity, but the sulfide-based inorganic solid electrolytes may also include elements other than Li, S, and P depending on the purposes or cases.

Examples of the sulfide-based inorganic solid electrolyte include a lithium ion-conductive sulfide-based inorganic solid electrolyte satisfying the composition represented by Formula (S1).

$$L_{a1}M_{b1}P_{c1}S_{d1}A_{e1} \qquad (S1)$$

In Formula (S1), L represents an element selected from Li, Na, or K and is preferably Li. M represents an element selected from B, Zn, Sn, Si, Cu, Ga, Sb, Al, or Ge. A represents an element selected from I, Br, Cl, or F. a1 to e1 represent the compositional ratios between the respective elements, and a1:b1:c1:d1:e1 satisfies 1 to 12:0 to 5:1:2 to 12:0 to 10. al is preferably 1 to 9 and more preferably 1.5 to 7.5. b1 is preferably 0 to 3 and more preferably 0 to 1. d1 is preferably 2.5 to 10 and more preferably 3.0 to 8.5. el is preferably 0 to 5 and more preferably 0 to 3.

The compositional ratios between the respective elements can be controlled by adjusting the amounts of raw material compounds blended to manufacture the sulfide-based inorganic solid electrolyte as described below.

The sulfide-based inorganic solid electrolytes may be non-crystalline (glass) or crystallized (made into glass ceramic) or may be only partially crystallized. For example, it is possible to use Li-P-S-based glass containing Li, P, and S or Li-P-S-based glass ceramic containing Li, P, and S.

The sulfide-based inorganic solid electrolytes can be manufactured by a reaction of at least two or more raw materials of, for example, lithium sulfide ($Li_2S$), phosphorus sulfide (for example, diphosphorus pentasulfide ($P_2S_5$)), a phosphorus single body, a sulfur single body, sodium sulfide, hydrogen sulfide, lithium halides (for example, LiI, LiBr, and LiCl), or sulfides of an element represented by M (for example, $SiS_2$, SnS, and $GeS_2$).

The ratio of $Li_2S$ to $P_2S_5$ in Li-P-S-based glass and Li-P-S-based glass ceramic is preferably 60:40 to 90:10 and more preferably 68:32 to 78:22 in terms of the molar ratio, $Li_2S$:$P_2S_5$. In a case where the ratio between $Li_2S$ and $P_2S_5$ is set in the above-described range, it is possible to increase a lithium ion conductivity. Specifically, the lithium ion conductivity can be preferably set to $1 \times 10^{-4}$ S/cm or more and more preferably set to $1 \times 10^{-3}$ S/cm or more. The upper limit is not particularly limited but realistically $1 \times 10^{-1}$ S/cm or less.

As specific examples of the sulfide-based inorganic solid electrolytes, combination examples of raw materials will be described below. Examples thereof include $Li_2S$-$P_2S_5$, $Li_2S$-$P_2S_5$-LiCl, $Li_2S$-$P_2S_5$-$H_2S$, $Li_2S$-$P_2S_5$-$H_2S$-LiCl, $Li_2S$-LiI-$P_2S_5$, $Li_2S$-LiI-$Li_2O$-$P_2S_5$, $Li_2S$-LiBr-$P_2S_5$, $Li_2S$-$Li_2O$-$P_2S_5$, $Li_2S$-$Li_3PO_4$-$P_2S_5$, $Li_2S$-$P_2S_5$-$P_2O_5$, $Li_2S$-$P_2S_5$-$SiS_2$, $Li_2S$-$P_2S_5$-$SiS_2$-LiCl, $Li_2S$-$P_2S_5$-SnS, $Li_2S$-$P_2S_5$-$Al_2S_3$, $Li_2S$-$GeS_2$, $Li_2S$-$GeS_2$-ZnS, $Li_2S$-$Ga_2S_3$, $Li_2S$-$GeS_2$-$Ga_2S_3$, $Li_2S$-$GeS_2$-$P_2S_5$, $Li_2S$-$Ge_S$2-$Sb_2S_5$, $Li_2S$-$GeS_2$-$Al_2S_3$, $Li_2S$-$SiS_2$, $Li_2S$-$Al_2S_3$, $Li_2S$-$SiS_2$-$Al_2S_3$, $Li_2S$-$SiS_2$-$P_2S_5$, $Li_2S$-$Si_S$2-$P_2S_5$-LiI, $Li_2S$-$SiS_2$-LiI, $Li_2S$-$SiS_2$-$Li_4SiO_4$, $Li_2S$-$SiS_2$-$Li_3PO_4$, and $Li_{10}GeP_2S_{12}$. The mixing ratio between the individual raw materials does not matter. Examples of the method of synthesizing a sulfide-based inorganic solid electrolyte material using the above-described raw material compositions include an amorphization method. Examples of the amorphization method include a mechanical milling method, a solution method, and a melting quenching method. This because treatments at a normal temperature become possible, and it is possible to simplify manufacturing processes.

The sulfide-based inorganic solid electrolyte is preferably particulate. The shape of the particle is not particularly limited and may be a flat shape, an amorphous shape, or the like; however, a spherical shape or a granular shape is preferable.

The average particle diameter (the volume average particle diameter) of the sulfide-based inorganic solid electrolyte is not particularly limited; however, it is preferably 0.01 μm or more and more preferably 0.1 μm or more. The upper limit is preferably 100 μm or less and more preferably 50 μm or less.

The average particle diameter of the sulfide-based inorganic solid electrolyte is measured according to the following procedure. Using water (heptane in a case where the substance is unstable in water), the sulfide-based inorganic solid electrolyte particles are diluted in a 20 mL sample bottle to prepare 1% by mass of a dispersion sample. The diluted dispersion liquid sample is irradiated with 1 kHz ultrasonic waves for 10 minutes and is then immediately used for testing. Data collection is carried out 50 times using this dispersion liquid sample, a laser diffraction/scattering-type particle size distribution analyzer LA-920 (product name, manufactured by Horiba Ltd.), and a quartz cell for measurement at a temperature of 25°C to obtain the volume average particle diameter. Other detailed conditions and the like can be found in Japanese Industrial Standards (JIS) Z8828: 2013 "particle diameter Analysis-Dynamic Light Scattering" as necessary. Five samples per level are produced, and the average values therefrom are employed.

The specific surface area of the sulfide-based inorganic solid electrolyte generally has a value smaller than the specific surface area of the active material described later, which is not limited to this, and it is appropriately set.

One kind of sulfide-based inorganic solid electrolyte may be contained, or two or more kinds thereof may be contained.

The content of the sulfide-based inorganic solid electrolyte in the electrode composition is not particularly limited. However, in terms of adhesiveness as well as dispersibility, the total content of the sulfide-based inorganic solid electrolyte and the active material is preferably 50% by mass or more, more preferably 70% by mass or more, and still more preferably 90% by mass or more, in the solid content of 100% by mass. From the same viewpoint, the upper limit thereof is preferably 99.9% by mass or less, more preferably 99.5% by mass or less, and particularly preferably 99% by mass or less. The content of only the sulfide-based inorganic solid electrolyte in the electrode composition is appropriately set so that the total content of the active material is within the above range.

In the present invention, the solid content (solid component) refers to components that neither volatilize nor evaporate and disappear in a case where the electrode composition is subjected to drying treatment at 150°C for 6 hours in a nitrogen atmosphere at a pressure of 1 mmHg. Typically, the solid content refers to a component other than a dispersion medium described below.

<Active material>

The electrode composition according to the embodiment of the present invention includes an active material

capable of intercalating and deintercalating ions of a metal belonging to Group 1 or Group 2 in the periodic table.

The active material contained in the electrode composition according to the embodiment of the present invention has a particle shape at least in the electrode composition. The shape of the particle is not particularly limited and may be a flat shape, an amorphous shape, or the like; however, a spherical shape or a granular shape is preferable.

The active material (particles) has a specific surface area of 10 $m^2/g$ or more. In the present invention, in a case of using being used in combination with a polymer binder described later, it is possible to improve the low dispersion characteristics remarkable in an active material having a large specific surface area, and thus it is possible to use such an active material having a large specific surface area. As a result, the active material layer containing an active material having a specific surface area of 10 $m^2/g$ or more has a large number of lithium ion conduction paths, and thus an all-solid state secondary battery that exhibits excellent cycle characteristics can be realized.

The specific surface area of the active material is preferably set within a range in which the improvement of dispersion characteristics and the improvement of cycle characteristics can be achieved in a well-balanced manner. The lower limit value thereof is preferably 12 $m^2/g$ or more, more preferably 15 $m^2/g$ or more, and still more preferably 20 $m^2/g$ or more. On the other hand, the upper limit value thereof is preferably 50 $m^2/g$ or less, more preferably 45 $m^2/g$ or less, and still more preferably 40 $m^2/g$ or less.

In the present invention, the specific surface area means the BET specific surface area, and it is a value calculated according to the BET (one point) method by the nitrogen adsorption method. Specifically, it is a value obtained by carrying out measurement using the following measuring device under the following conditions, on an active material that is used in the electrode composition or an active material extracted as described below, from an electrode sheet for an all-solid state secondary battery or an active material layer of an all-solid state secondary battery.

- Measuring method for BET specific surface area -

Specific surface area/pore distribution measuring device:

BELSORP MINI (product name, manufactured by MicrotracBEL Corp.) is used to carry out the measurement according to the gas adsorption method (nitrogen). 0.3 g of an active material is packed in a sample tube having an inner diameter of 3.6 mm, and nitrogen is allowed to flow at 80°C for 6 hours to dry the sample, which is used for the measurement.

- Method of extracting active material from active material layer -

0.5 g of an active material layer is added to 50 g of butyl butyrate, and the resultant mixture is centrifuged at 3,000 rpm for 1 hour. 50 g of N-methylformamide is added to a precipitate obtained by separating the supernatant, and the resultant mixture is stirred at room temperature for 1 hour. The dispersion liquid thus obtained in this way is centrifuged at 5,000 rpm for 1 hour, and then the supernatant is separated to obtain a precipitate. This precipitate is washed twice with 25 g ofN-methylformamide and then subjected to vacuum drying at 100°C for 2 hours, whereby an active material extracted from the active material layer can be obtained.

As the active material having a specific surface area in the above range, a commercially available product may be used, or an appropriately prepared product may be used. The method of adjusting the specific surface area is not particularly limited, and a known method can be applied. Examples thereof include a method of adjusting the average particle diameter, a modification condition, and the like, which will be described later.

The average particle diameter of the active material that is used in the present invention is not particularly limited and is appropriately set in consideration of the specific surface area. For example, in terms of both dispersion characteristics and cycle characteristics, it is preferably 10 $\mu m$ or less, more preferably 1 $\mu m$ or less, and still more preferably 0.6 $\mu m$ or less. The lower limit of the average particle diameter is practically 0.01 $\mu m$ or more, and it is, for example, preferably 0.03 $\mu m$ or more and more preferably 0.05 $\mu m$ or more.

The average particle diameter of the active material can be measured using the same method as that of the average particle diameter of the sulfide-based inorganic solid electrolyte.

The method of adjusting the average particle diameter is not particularly limited, and a known method can be applied. Examples thereof include a method using a normal pulverizer or a classifier. As the pulverizer or a classifier, for example, a mortar, a ball mill, a sand mill, a vibration ball mill, a satellite ball mill, a planetary ball mill, a swirling airflow-type jet mill, or a sieve is preferably used. During pulverization, it is possible to carry out wet-type pulverization in which water or a dispersion medium such as methanol is made to be present together. In order to provide the desired average particle diameter, classification is preferably carried out. The classification is not particularly limited and can be carried out using a sieve, a wind power classifier, or the like. Both the dry-type classification and the wet-type classification can be carried out.

Examples of the active material include a positive electrode active material and a negative electrode active

material.

(Negative electrode active material)

The negative electrode active material is an active material capable of intercalating and deintercalating an ion of a metal belonging to Group 1 or Group 2 of the periodic table, and it is preferably one capable of reversibly intercalating and deintercalating a lithium ion. The material is not particularly limited as long as it has the above-described characteristics, and examples thereof include a carbonaceous material, a metal oxide, a metal composite oxide, a lithium single body, a lithium alloy, and a negative electrode active material that is capable of forming an alloy (capable of being alloyed) with lithium. Among the above, a carbonaceous material, a metal composite oxide, or a lithium single body is preferably used from the viewpoint of reliability. An active material that is capable of being alloyed with lithium is preferable since the capacity of the all-solid state secondary battery can be increased. In the active material layer formed of the electrode composition according to the embodiment of the present invention, it is possible to maintain a state where solid particles firmly bind to each other, and thus it is possible to use a negative electrode active material capable of forming an alloy with lithium, as the negative electrode active material. As a result, it is possible to increase the capacity of the all-solid state secondary battery and extend battery life.

The carbonaceous material that is used as the negative electrode active material is a material substantially consisting of carbon. Examples thereof include petroleum pitch, carbon black such as acetylene black (AB), graphite (natural graphite, artificial graphite such as vapor-grown graphite), and carbonaceous material obtained by baking a variety of synthetic resins such as polyacrylonitrile (PAN)-based resins or furfuryl alcohol resins. Furthermore, examples thereof also include a variety of carbon fibers such as PAN-based carbon fibers, cellulose-based carbon fibers, pitch-based carbon fibers, vapor-grown carbon fibers, dehydrated polyvinyl alcohol (PVA)-based carbon fibers, lignin carbon fibers, vitreous carbon fibers, and activated carbon fibers, mesophase microspheres, graphite whisker, and tabular graphite.

These carbonaceous materials can be classified into non-graphitizable carbonaceous materials (also referred to as "hard carbon") and graphitizable carbonaceous materials based on the graphitization degree. In addition, it is preferable that the carbonaceous material has the lattice spacing, density, and crystallite size described in JP1987-22066A (JP-S62-22066A), JP1990-6856A (JP-H2-6856A), and JP1991-45473A (JP-H3-45473A). The carbonaceous material is not necessarily a single material and, for example, may be a mixture of natural graphite and artificial graphite described in JP1993-90844A (JP-H5-90844A) or graphite having a coating layer described in JP1994-4516A (JP-H6-4516A).

As the carbonaceous material, hard carbon or graphite is preferably used, and graphite is more preferably used.

The oxide of a metal or a metalloid element that can be used as the negative electrode active material is not particularly limited as long as it is an oxide capable of intercalating and deintercalating lithium, and examples thereof include an oxide of a metal element (metal oxide), a composite oxide of a metal element or a composite oxide of a metal element and a metalloid element (collectively referred to as "metal composite oxide), and an oxide of a metalloid element (a metalloid oxide). The oxides are more preferably noncrystalline oxides, and preferred examples thereof include chalcogenides which are reaction products between metal elements and elements in Group 16 of the periodic table). In the present invention, the metalloid element refers to an element having intermediate properties between those of a metal element and a non-metal element. Typically, the metalloid elements include six elements including boron, silicon, germanium, arsenic, antimony, and tellurium, and further include three elements including selenium, polonium, and astatine. In addition, "amorphous" represents an oxide having a broad scattering band with an apex in a range of 20° to 40° in terms of $2\theta$ value in case of being measured by an X-ray diffraction method using CuK$\alpha$ rays, and the oxide may have a crystalline diffraction line. The highest intensity in a crystalline diffraction line observed in a range of 40° to 70° in terms of 20 value is preferably 100 times or less and more preferably 5 times or less with respect to the intensity of a diffraction line at the apex in a broad scattering band observed in a range of 20° to 40° in terms of 20 value, and it is still more preferable that the oxide does not have a crystalline diffraction line.

In the compound group consisting of the noncrystalline oxides and the chalcogenides, noncrystalline oxides of metalloid elements and chalcogenides are more preferable, and (composite) oxides consisting of one element or a combination of two or more elements selected from elements (for example, Al, Ga, Si, Sn, Ge, Pb, Sb, and Bi) belonging to Groups 13 (IIIB) to 15 (VB) in the periodic table or chalcogenides are more preferable. Specific examples of preferred noncrystalline oxides and chalcogenides preferably include $Ga_2O_3$, GeO, PbO, $PbO_2$, $Pb_2O_3$, $Pb_2O_4$, $Pb_3O_4$, $Sb_2O_3$, $Sb_2O_4$, $Sb_2O_8Bi_2O_3$, $Sb_2O_8Si_2O_3$, $Sb_2O_5$, $Bi_2O_3$, $Bi_2O_4$, GeS, PbS, $PbS_2$, $Sb_2S_3$, and $Sb_2S_5$.

Preferred examples of the negative electrode active material which can be used in combination with noncrystalline oxides containing Sn, Si, or Ge as a major component include a carbonaceous material capable of intercalating and/or deintercalating lithium ions or lithium metal, a lithium single body, a lithium alloy, and a negative electrode active material capable of forming an alloy with lithium.

It is preferable that an oxide of a metal or a metalloid element, in particular, a metal (composite) oxide and the

above chalcogenide contain at least one of titanium or lithium as the constitutional component from the viewpoint of high current density charging and discharging characteristics. Examples of the metal composite oxide (lithium composite metal oxide) including lithium include a composite oxide of lithium oxide and the above metal (composite) oxide or the above chalcogenide, and specifically, $Li_2SnO_2$.

As the negative electrode active material, for example, a metal oxide (titanium oxide) having a titanium element is also preferable. Specifically, $Li_4Ti_5O_{12}$ (lithium titanium oxide [LTO]) is preferable since the volume variation during the intercalation and deintercalation of lithium ions is small, and thus the high-speed charging and discharging characteristics are excellent, and the deterioration of electrodes is suppressed, whereby it becomes possible to improve the service lives of the lithium ion secondary battery.

The lithium alloy as the negative electrode active material is not particularly limited as long as it is typically used as a negative electrode active material for a secondary battery, and examples thereof include a lithium aluminum alloy, using lithium as a base metal, to which 10% by mass of aluminum is added.

The negative electrode active material capable of forming an alloy lithium is not particularly limited as long as it is typically used as a negative electrode active material for a secondary battery. Such an active material has a large expansion and contraction due to charging and discharging of the all-solid state secondary battery and accelerates the deterioration of the cycle characteristics. However, since the electrode composition according to the embodiment of the present invention contains a polymer binder described later by combining it with the active material, and thus it is possible to effectively suppress the deterioration of the cycle characteristics due to charging and discharging. Examples of such an active material include a (negative electrode) active material (an alloy or the like) having a silicon element or a tin element and a metal such as Al or In, a negative electrode active material (a silicon element-containing active material) having a silicon element capable of exhibiting high battery capacity is preferable, and a silicon-containing active material in which the content of the silicon element is 50% by mole or more with respect to all the constitutional elements is more preferable.

In general, a negative electrode including the negative electrode active material (for example, an Si negative electrode including a silicon-containing active material or an Sn negative electrode containing an active material containing a tin element) can intercalate a larger amount of Li ions than a carbon negative electrode (for example, graphite or acetylene black). That is, the amount of Li ions intercalated per unit mass increases. As a result, the battery capacity (the energy density) can be increased. As a result, there is an advantage that the battery driving duration can be extended.

Examples of the silicon-containing active material include a silicon-containing alloy (for example, $LaSi_2$, $VSi_2$, La-Si, Gd-Si, or Ni-Si) including a silicon material such as Si or SiOx ($0 < x \leq 1$) and titanium, vanadium, chromium, manganese, nickel, copper, lanthanum, or the like or a structured active material thereof (for example, $LaSi_2/Si$), and an active material such as $SnSiO_3$ or $SnSiS_3$ including silicon element and tin element. In addition, since SiOx itself can be used as a negative electrode active material (a metalloid oxide) and Si is produced along with the operation of an all-solid state secondary battery, SiOx can be used as a negative electrode active material (or a precursor material thereof) capable of being alloyed with lithium.

Examples of the negative electrode active material including tin element include Sn, SnO, $SnO_2$, SnS, $SnS_2$, and the above-described active material including silicon element and tin element. In addition, a composite oxide with lithium oxide, for example, $Li_2SnO_2$ can also be used.

In the present invention, the above-described negative electrode active material can be used without any particular limitation. From the viewpoint of battery capacity, a preferred aspect as the negative electrode active material is a negative electrode active material that is capable of being alloyed with lithium. Among them, the silicon material or the silicon-containing alloy (the alloy containing a silicon element) described above is more preferable, and it is more preferable to include a negative electrode active material containing silicon (Si) or a silicon-containing alloy.

The negative electrode active material contained in the electrode composition may be one kind or two or more kinds.

In a case of forming a negative electrode active material layer, the mass (mg) (mass per unit area) of the negative electrode active material per unit area ($cm^2$) in the negative electrode active material layer is not particularly limited. It can be appropriately determined according to the designed battery capacity and can be set to, for example, 1 to 100 $mg/cm^2$.

The content of the negative electrode active material in the electrode composition is not particularly limited, and it is preferably 10% to 90% by mass, more preferably 20% to 85% by mass, still more preferably 30% to 80% by mass, and even still more preferably 40% to 75% by mass, in the solid content of 100% by mass.

(Positive electrode active material)

The positive electrode active material is an active material capable of intercalating and deintercalating an ion of a metal belonging to Group 1 or Group 2 of the periodic table, and it is preferably one capable of reversibly intercalating and deintercalating a lithium ion. The above-described material is not particularly limited as long as the material has the

above-described characteristics and may be a transition metal oxide, an organic substance, or an element, which is capable of being complexed with Li, such as sulfur or the like by disassembling the battery.

Among the above, as the positive electrode active material, transition metal oxides are preferably used, and transition metal oxides having a transition metal element $M^a$ (one or more elements selected from Co, Ni, Fe, Mn, Cu, and V) are more preferable. In addition, an element $M^b$ (an element of Group 1 (Ia) of the metal periodic table other than lithium, an element of Group 2 (IIa), or an element such as Al, Ga, In, Ge, Sn, Pb, Sb, Bi, Si, P, or B) may be mixed into this transition metal oxide. The mixing amount thereof is preferably 0% to 30% by mole of the amount (100% by mole) of the transition metal element $M^a$. It is more preferable that the transition metal oxide is synthesized by mixing the above components such that a molar ratio $Li/M^a$ is 0.3 to 2.2.

Specific examples of the transition metal oxides include transition metal oxides having a bedded salt-type structure (MA), transition metal oxides having a spinel-type structure (MB), lithium-containing transition metal phosphoric acid compounds (MC), lithium-containing transition metal halogenated phosphoric acid compounds (MD), and lithium-containing transition metal silicate compounds (ME).

Specific examples of the transition metal oxides having a bedded salt-type structure (MA) include $LiCoO_2$ (lithium cobalt oxide [LCO]), $LiNi_2O_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickelate).

Specific examples of the transition metal oxides having a spinel-type structure (MB) include $LiMn_2O_4$ (LMO), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compound (MC) include olivine-type iron phosphate salts such as $LiFePO_4$ and $Li_3Fe_2(PO_4)_3$, iron pyrophosphates such as $LiFeP_2O_7$, and cobalt phosphates such as $LiCoPO_4$, and a monoclinic NASICON type vanadium phosphate salt such as $Li_3V_2(PO_4)_3$ (lithium vanadium phosphate).

Examples of the lithium-containing transition metal halogenated phosphoric acid compound (MD) include iron fluorophosphates such as $Li_2FePO_4F$, manganese fluorophosphates such as $Li_2MnPO_4F$, cobalt fluorophosphates such as $Li_2CoPO_4F$.

Examples of the lithium-containing transition metal silicate compounds (ME) include $Li_2FeSiO_4$, $Li_2MnSiO_4$, and $Li_2CoSiO_4$.

In the present invention, the transition metal oxide having a bedded salt-type structure (MA) is preferable, and LCO or NMC is more preferable.

A positive electrode active material obtained using a baking method may be used after being washed with water, an acidic aqueous solution, an alkaline aqueous solution, or an organic solvent.

The positive electrode active material contained in the electrode composition may be one kind or two or more kinds.

In a case of forming a positive electrode active material layer, the mass (mg) (mass per unit area) of the positive electrode active material per unit area ($cm^2$) of the positive electrode active material layer is not particularly limited. It can be appropriately determined according to the designed battery capacity and can be set to, for example, 1 to 100 $mg/cm^2$.

The content of the positive electrode active material in the electrode composition is not particularly limited; however, it is preferably 10% to 97% by mass, more preferably 30% to 95% by mass, still more preferably 40% to 93% by mass, and particularly preferably 50% to 90% by mass, with respect to 100% by mass of the solid content.

The chemical formulae of the compounds obtained by the above baking method can be calculated using an inductively coupled plasma (ICP) emission spectroscopy as a measuring method from the mass difference of powder before and after baking as a convenient method.

(Coating of active material)

The surfaces of the positive electrode active material and the negative electrode active material may be subjected to surface coating with another metal oxide. Examples of the surface coating agent include metal oxides and the like containing Ti, Nb, Ta, W, Zr, Al, Si, or Li. Specific examples thereof include titanium oxide spinel, tantalum-based oxides, niobium-based oxides, and lithium niobate-based compounds, and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, and $B_2O_3$.

In addition, the surface of the electrode containing the positive electrode active material or negative electrode active material may be subjected to a surface treatment with sulfur or phosphorous.

Further, the particle surface of the positive electrode active material or negative electrode active material may be subjected to a surface treatment with an actinic ray or an active gas (plasma or the like) before and after the surface coating.

<Polymer binder>

The polymer binder (also referred to as the binder) contained in the electrode composition according to the embodiment of the present invention is used in combination with the above-described active material having a specific surface area of 10 $m^2/g$ or more, and it interacts with the active material and improves dispersion stability in the electrode composition. Further, the dispersion stability of solid particles other than the active material can be improved. Further, in a case of a sulfide-based inorganic solid electrolyte and an active material are in combination, high adhesiveness to a collector and high adhesiveness between solid particles are exhibited.

It is preferable that the binder has solubility and is dissolved in the dispersion medium contained in the electrode composition. This makes it possible to enhance the dispersion characteristics of the electrode composition. Further, it is possible to further enhance the adhesiveness between the solid particles or to the collector to enhance the effect of improving the cycle characteristics of the all-solid state secondary battery.

In the present invention, the description that the binder is dissolved in a dispersion medium is not limited to an aspect in which the entire binder is dissolved in the dispersion medium, and it refers to, for example, that the solubility in the dispersion medium is 80% or more. The measuring method for solubility is as follows.

That is, a specified amount of a binder to be measured is weighed in a glass bottle, 100 g of a dispersion medium that is the same kind as the dispersion medium contained in the electrode composition is added thereto, and stirring is carried out at a temperature of 25°C on a mix rotor at a rotation speed of 80 rpm for 24 hours. After stirring for 24 hours, the obtained mixed solution is subjected to the transmittance measurement under the following conditions. This test (the transmittance measurement) is carried out by changing the amount of the binder dissolved (the above-described specified amount), and the upper limit concentration X (% by mass) at which the transmittance is 99.8% is defined as the solubility of the binder in the above dispersion medium.

- Transmittance measurement conditions -

Dynamic light scattering (DLS) measurement
Device: DLS measuring device DLS-8000 manufactured by Otsuka Electronics Co., Ltd.
Laser wavelength, output: 488 nm/100 mW
Sample cell: NMR tube

In the present invention, in a case where the binder does not exhibit the above-described solubility in the dispersion medium contained in the electrode composition, it is preferable that the binder is present as particles in the electrode composition (the dispersion medium). The shape thereof is not particularly limited and may be a flat shape, an amorphous shape, or the like; however, a spherical shape or a granular shape is preferable. In this case, in the electrode composition, the average particle diameter of the particle-shaped polymer binder is not particularly limited; however, it is preferably 10 nm or more, more preferably 50 nm or more, and still more preferably 200 nm or more. The upper limit value thereof is preferably 5 μm or less, more preferably 1 μm or less, and still more preferably 500 nm or less. The average particle diameter of the binder can be measured using the same method as that of the average particle diameter of the inorganic solid electrolyte. The average particle diameter of the binder can be adjusted, for example, by the kind of dispersion medium, the composition of the binder forming polymer, and the like.

(Polymer that forms polymer binder)

The polymer that forms the polymer binder (also referred to as a binder forming polymer) is not particularly limited as long as it has a constitutional component derived from a (meth)acrylic monomer or a vinyl monomer, which has an SP value of 19.0 $MPa^{1/2}$ or more. However, as described below, preferred examples thereof include a (meth)acrylic polymers and a vinyl polymer.

The polymer that forms the polymer binder may be one kind or two or more kinds.

The constitutional component at least contained in the binder forming polymer is a constitutional component derived from a monomer having an SP value of 19.0 $MPa^{1/2}$ or more. The constitutional component derived from the monomer having such an SP value is not particularly limited. It may be a constitutional component having no polar group (for example, an alkyl group having 1 to 6 carbon atoms), and it is preferably a constitutional component having a polar group. As described above, the alkyl group or the polar group interacts with the surface of the above-described active material having a specific surface area of 10 $m^2/g$ or more to adsorb the binder to the active material.

In a case where the SP value of the monomer, from which the above-described constitutional component (including a constitutional component having no polar group, which may be referred to as a polar group-containing

constitutional component for convenience) is derived, is 19.0 $MPa^{1/2}$ or more, it is possible to improve the dispersion characteristics of solid particles, particularly, the active material, and further, it is possible to strengthen the adhesion. In terms of further improving the dispersion characteristics and adhesion of solid particles, particularly the active material, it is preferably 19.5 $MPa^{1/2}$ or more, more preferably 20.0 $MPa^{1/2}$ or more, and still more preferably 20.5 $MPa^{1/2}$ or more. The upper limit of the SP value can be appropriately set according to the specific surface area of the active material and the like, and it is, for example, preferably 28.0 $MPa^{1/2}$ or less and more preferably 26.5 $MPa^{1/2}$ or less in that excellent dispersion characteristics can be maintained without impairing the strong adhesion.

The SP value of the monomer can be adjusted according to the kind, number, and the like of the polar group that is introduced into the monomer.

The SP value of the monomer is the SP value as a monomer (a homopolymer), and a value determined according to the Hoy method (see H. L. Hoy JOURNAL OF PAINT TECHNOLOGY, Vol. 42, No. 541, 1970, 76-118, and POLYMER HANDBOOK 4th, Chapter 59, VII, page 686, Table 5, Table 6, and the following formula in Table 6) is converted to the SP value ($MPa^{1/2}$) (for example, $1cal^{1/2}cm^{-3/2} \approx 2.05\ J^{1/2}cm^{-3/2} \approx 2.05\ MPa^{1/2}$) and used.

$$\delta_t = \frac{F_t + \frac{B}{\bar{n}}}{V}; B = 277$$

In the expression, $\delta_t$ indicates an SP value. Ft is a molar attraction function $(J \times cm^3)^{1/2}/mol$ and represented by the following expression. V is a molar volume ($cm^3/mol$) and represented by the following expression. $\bar{n}$ is represented by the following expression.

$$F_t = \sum n_i F_{t,i} \qquad V = \sum n_i V_i$$

$$\bar{n} = \frac{0.5}{\Delta_T^{(P)}} \qquad \Delta_T^{(P)} = \sum n_i \Delta_{T,i}^{(P)}$$

In the above formula, $F_{t,i}$ indicates a molar attraction function of each constitutional unit, $V_i$ indicates a molar volume of each constitutional unit, $\Delta^{(P)}{}_{T,i}$ indicates a correction value of each constitutional unit, and $n_i$ indicates the number of each constitutional unit.

The polar group contained in the above-described polar group-containing constitutional component is not particularly limited as long as the SP value of the monomer can be set to 19.0 $MPa^{1/2}$ or more. However, examples thereof include a polar group (a hydroxyl group, a carboxy group, a sulfonate group, a phosphate group, phosphonate group, an amino group, or the like) containing active hydrogen (a hydrogen atom directly bonded to a hetero atom such as oxygen or nitrogen), a heterocyclic group, a group containing an ether bond (an alkoxy group, a polyoxy group, or the like), a nitrile group, and an amide group. Examples of the heterocyclic group include the corresponding group in the substituent T described later, where a group consisting of an aliphatic heterocyclic structure described in Formula (M1) is preferable. Among them, the polar group is preferably a polar group containing active hydrogen or a heterocyclic group in terms of improving dispersion characteristics and adhesiveness, and further, in terms of improving cycle characteristics.

The polar group-containing constitutional component is a constitutional component derived from a (meth)acrylic monomer or a vinyl monomer in terms of spreading to a dispersion medium in addition to proper adsorption to the active material due to the polar group.

The (meth)acrylic monomer includes a monomer having a (meth)acryloyloxy group or a (meth)acryloylamino group, as well as a (meth)acrylonitrile compound and the like. The (meth)acrylic monomer is not particularly limited; however, examples thereof include (meth)acrylic compounds (M) such as a (meth)acrylic acid compound, a (meth)acrylic acid ester compound, a (meth)acrylamide compound, and a (meth) acrylonitrile compound. Among them, a (meth)acrylic acid ester compound is preferable. The (meth)acrylic acid ester compound is not particularly limited; however, examples

thereof include an ester of a heterocyclic compound such as an aliphatic or aromatic hydrocarbon, an aliphatic or aromatic heterocyclic compound. The number of carbon atoms of these hydrocarbons, heterocyclic compounds, and the like, and the kind or number of heteroatoms are not particularly limited and are appropriately set. For example, the number of carbon atoms can be 1 to 30.

The vinyl monomer is a monomer containing a vinyl group other than the (meth)acrylic compound (M), and it is not particularly limited. Examples thereof include vinyl group-containing aromatic compounds (a styrene compound, a vinyl naphthalene compound, and the like); vinyl group-containing heterocyclic compounds (a vinyl carbazole compound, a vinyl pyridine compound, a vinyl imidazole compound, N-vinylcaprolactam, a vinyl group-containing non-aromatic (aliphatic) heterocyclic compound, and the like); and vinyl compounds such as an allyl compound, a vinyl ether compound, a vinyl ketone compound, a vinyl ester compound, a dialkyl itaconate compound, an unsaturated carboxylic acid anhydrides, and the like. Examples of the vinyl compound include the "vinyl monomer" disclosed in JP2015-88486A.

The polar group-containing constitutional component is preferably a component derived from a (meth)acrylic monomer or vinyl monomer having the above-described polar group. However, it is more preferable to have a structure represented by Formula (M1) or Formula (M2) in terms of further improvement of dispersion characteristics and adhesiveness, and further, in terms of the improvement of cycle characteristics.

Formula (M1)

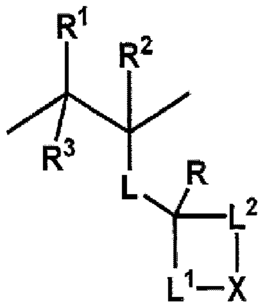

Formula (M2)

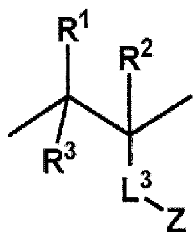

The structure represented by Formula (M1) is a constitutional component having a heterocyclic group (however, it also corresponds to a constitutional component having a polar group containing active hydrogen in a case where X is -NH-), and the structure represented by Formula (M2) is a constitutional component having a polar group containing active hydrogen.

In Formula (M1) and Formula (M2), the atom, the substituent, the linking group, and the like, which are represented by each reference numeral, are selected in an appropriate combination in consideration of the SP value.

R, $R^1$, $R^2$, and $R^3$ each represent a hydrogen atom or a substituent. The substituent that can be adopted R, $R^1$, $R^2$, or $R^3$ is not particularly limited, and examples thereof include a substituent T described later. Among them, an alkyl group, an aryl group, a halogen atom, or the like is preferable. R, $R^1$, $R^2$, and $R^3$ are each preferably a hydrogen atom, an alkyl group, or a halogen atom, and more preferably a hydrogen atom, a methyl group, or an ethyl group. It is still more preferable that $R^1$ and $R^3$ are a hydrogen atom and $R^2$ is a methyl group.

In Formula (M1), L represents a linking group. The linking group that can be adopted as L is appropriately selected from the following linking groups so that the structure represented by Formula (M1) is derived from the (meth)acrylic monomer or the vinyl monomer. The linking group that can be adopted as L is still more preferably a -CO-O- group or a group containing a -CO-N($R^N$)- group ($R^N$ is as follows), and particularly preferably a -CO-O-alkylene group, or a -CO-N($R^N$)-alkylene group.

$L^1$ and $L^2$ each represent a single bond or a linking group, and preferably, at least one of $L^1$ or $L^2$ is a linking group. The linking group that can be adopted as $L^1$ and $L^2$ is appropriately selected from the following linking groups. It is preferably an alkylene group or an alkenylene group and more preferably an alkylene group.

X represents -O-, -S-, or -NR$^M$-, and it is preferably -O-. $R^M$ represents a hydrogen atom or a substituent. The substituent that can be adopted $R^M$ is not particularly limited, and examples thereof include a substituent T described later. $R^M$ is preferably a hydrogen atom or an alkyl group.

In Formula (M1), the ring structure constituted by including $L^1$, $L^2$, and X is not particularly limited as long as it is obtained by appropriately combining $L^1$, $L^2$, and X. However, it is preferably the above-described ring structure that can be a heterocyclic group that can be adopted as a polar group contained in the polar group-containing constitutional component, more preferably an aliphatic heterocyclic structure, still more preferably an aliphatic saturated heterocyclic structure, and particularly preferably a cyclic ether structure. The number of ring members of the ring structure in Formula (M1) is not particularly limited; however, it is preferably a 3-membered to 10-membered ring, more preferably a 4-membered to 8-membered ring, and still more preferably a 4-membered to 6-membered ring. Examples of the ring

structure in Formula (M1) preferably include an epoxy ring structure, an oxetane ring structure, a tetrahydrofuran ring structure, and a tetrahydropyran ring structure.

In Formula (M2), $L^3$ represents a single bond or a linking group. In a case where a linking group is adopted as $L^3$, the linking group is appropriately selected from the following linking groups so that the structure represented by Formula (M2) is derived from the (meth)acrylic monomer or the vinyl monomer. The linking group that can be adopted as $L^3$ is still more preferably a -CO-O- group or a group containing a -CO-N($R^N$)- group ($R^N$ is as follows), and particularly preferably a -CO-O-alkylene group, or a -CO-N($R^N$)-alkylene group.

Z represents -OH or -COOH.

- Linking group -

In the present invention, the linking group is not particularly limited; however, examples thereof include an alkylene group (preferably having 1 to 12 carbon atoms, more preferably 1 to 6 carbon atoms, and still more preferably having 1 to 3 carbon atoms), an alkenylene group (preferably having 2 to 6 carbon atoms and more preferably having 2 or 3 carbon atoms), an arylene group (preferably having 6 to 24 carbon atoms and more preferably having 6 to 10 carbon atoms), an oxygen atom, a sulfur atom, an imino group (-$NR^N$-: $R^N$ represents a hydrogen atom, an alkyl group having 1 to 6 carbon atoms or an aryl group having 6 to 10 carbon atoms), a carbonyl group, a phosphate linking group (-O-P(OH)(O)-O-), a phosphonate linking group (-P(OH)(O)-O-), and a group involved in the combination thereof. It is also possible to form a polyalkyleneoxy chain by combining an alkylene group and an oxygen atom. The linking group is preferably a group composed of a combination of an alkylene group, an arylene group, a carbonyl group, an oxygen atom, a sulfur atom, and an imino group, more preferably a group composed of a combination of an alkylene group, an arylene group, a carbonyl group, an oxygen atom, and an imino group, still more preferably a group containing a -CO-O- group, a -CO-N($R^N$)- group (here, $R^N$ is as described above), and particularly preferably a -CO-O- group or a -CO-O-alkylene group.

In the present invention, the number of atoms forming the linking group is preferably 1 to 36, more preferably 1 to 24, and still more preferably 1 to 12. The number of linking atoms of the linking group is preferably 10 or less and more preferably 8 or less. The lower limit thereof is 1 or more. The number of linking atoms refers to the minimum number of atoms linking predetermined structural parts. For example, in a case of -$CH_2$-C(=O)-O-, the number of atoms that constitute the linking group is 6; however, the number of linking atoms is 3. Although the number of atoms that constitute the linking group and the number of linking atoms are as described above, the above does not apply to the polyalkyleneoxy chain that constitutes the linking group.

The linking groups each may have or may not have a substituent. Examples of the substituent which may be contained include the substituent T, and suitable examples thereof include a halogen atom.

Specific examples of the monomer having an SP value of 19.0 $MPa^{1/2}$ or more and the constitutional component derived from this monomer include the following monomer and the constitutional component M2 shown in Examples; however, the present invention is not limited thereto.

Butyl acrylate (SP value: 19.8 $MPa^{1/2}$), cyclohexyl methacrylate (SP value: 19.0 $MPa^{1/2}$), glycidyl methacrylate (SP value: 22.2 $MPa^{1/2}$), 2-hydroxyethyl acrylate (SP value: 25. 9$MPa^{1/2}$), glycerin monomethacrylate (SP value: 26.2$MPa^{1/2}$), methacrylic acid (SP value: 19.0$MPa^{1/2}$), mono(2-acryloyloxyethyl) succinate (SP value: 21.8$MPa^{1/2}$), vinyl imidazole (SP value: 20.8 $MPa^{1/2}$), tetrahydrofurfuryl acrylate (SP value: 21.4 $MPa^{1/2}$), methoxyethyl acrylate (SP value: 20.9 $MPa^{1/2}$), ethyl acrylate (SP value: 20.1 $MPa^{1/2}$), propyl acrylate (SP value: 19.8 $MPa^{1/2}$), methyl methacrylate (SP value: 19.4 $MPa^{1/2}$), benzyl methacrylate (SP value: 20.0 $MPa^{1/2}$), 2-(2-methethoxy)ethyl methacrylate (SP value: 20.4 $MPa^{1/2}$), acrylic nitrile (SP value: 25.3 $MPa^{1/2}$), and styrene (SP value: 19.3 $MPa^{1/2}$)

The binder forming polymer preferably has at least a constitutional component derived from a styrene compound as a polar group-containing constitutional component, and it more preferably has at least one of a constitutional component derived from a (meth)acrylic monomer or a constitutional component derived from a vinyl monomer other than a styrene compound and has a constitutional component (a styrene constitutional component) derived from a styrene compound.

The content of the above-described polar group-containing constitutional component in the binder forming polymer is appropriately set according to the SP value, is not particularly limited, and may be 100% by mole. However, it is preferably more than 0% by mole and 90% by mole or less, and more preferably more than 0% by mole and 85% by mole or less, in terms of the dispersion stability of the solid particles.

In the binder forming polymer, the content $C_A$ (% by mole) of the polar group-containing constitutional component (a constitutional component having no polar group is excluded) other than the styrene constitutional component is appropriately set in consideration of the above range. However, it is preferably more than 0% by mole and 80% by mole or less, more preferably 0.1% to 60% by mole, still more preferably 1% to 40% by mole, particularly preferably 1% to 30% by mole, and most preferably 1% to 15% by mole. The content of the polar group-containing constitutional component having no polar group (for example, the above-described constitutional component having an alkyl group), in the binder forming polymer, is appropriately set, and it can be set to, for example, 0% to 90% by mole. On the other hand, the

content Cs (% by mole) of the styrene constitutional component in the binder forming polymer is appropriately set in consideration of the above range. However, it is preferably 20% to 90% by mole, more preferably 20% to 80% by mole, still more preferably 40% to 80% by mole, and particularly preferably 70% to 80%.

In a case where the binder forming polymer has two or more kinds of the polar group-containing constitutional components including the styrene constitutional component as polar group-containing constitutional components, the molar ratio [$C_A/C_S$] of the content $C_A$ (% by mole) of the polar group-containing constitutional component other than the styrene constitutional component, relative to the content of styrene constitutional component Cs (% by mole) is preferably 0.001 to 10, more preferably 0.005 to 5, and still more preferably 0.01 to 1, in terms of dispersion stability, collector adhesiveness, and cycle characteristics.

The binder forming polymer may have other constitutional components in addition to the above-described polar group-containing constitutional component. The other constitutional components are not particularly limited as long as they can form a copolymer with the above-described polar group-containing constitutional component, and it includes a constitutional component derived from a (meth)acrylic monomer or vinyl monomer having as SP value of less than 19.0 $MPa^{1/2}$ and preferably an SP value of less than 19.0 $MPa^{1/2}$. This constitutional component can be selected from the compounds described as the monomers from which the polar group-containing constitutional component is derived, except that the SP values are different. Among the above, it is preferably a (meth)acrylic acid alkyl ester compound. The number of carbon atoms of the alkyl group constituting the alkyl ester is preferably 4 or more, more preferably 6 or more, still more preferably 8 or more, and even still more preferably 10 or more, in terms of increasing the solubility of the binder forming polymer in the dispersion medium. The upper limit of the carbon atoms thereof is not particularly limited, and it is preferably 20 or less and more preferably 14 or less.

The content of the other constitutional components in the binder forming polymer is not particularly limited; however, it is preferably 5% to 99% by mole, and more preferably 15% to 95% by mole.

In a case where the binder forming polymer does not have a styrene constitutional component as a polar group-containing constitutional component, the content of the other components is appropriately set in consideration of the above range; however, it is preferably 30% to 90% by mole. The lower limit value thereof is more preferably 40% by mole or more, still more preferably 50% by mole or more, and particularly preferably 80% by mole or more. On the other hand, in a case where the polar group-containing constitutional component has a styrene constitutional component, the content of the other components is appropriately set in consideration of the above range. However, it is preferably 15% to 50% by mole, more preferably 15% to 40% by mole, and still more preferably 15% to 30% by mole.

In addition, the molar ratio between the content of the polar group-containing constitutional component and the content of other constitutional components is not particularly limited as long as the above-described content is satisfied, and it can be appropriately set.

The kind of the binder forming polymer is not particularly limited as long as it has the above-described polar group-containing constitutional component, and various known polymers can be adopted. However, preferred examples thereof include a vinyl polymers or a (meth)acrylic polymer.

The vinyl polymer is not particularly limited; however, examples thereof include a polymer containing a vinyl monomer other than the (meth)acrylic compound (M), where the content of the vinyl polymer is, for example, 50% by mole or more. Examples of the vinyl monomer include vinyl compounds described above. The vinyl polymer includes polyvinyl alcohol, polyvinyl acetal, polyvinyl acetate, and a copolymer containing these.

In addition to the constitutional component derived from the vinyl monomer, this vinyl polymer may have a constitutional component derived from the (meth)acrylic compound (M) that forms a (meth)acrylic polymer described later. The content of the constitutional component derived from the vinyl monomer is preferably the same as the content of the constitutional component derived from the (meth)acrylic compound (M) in the (meth)acrylic polymer. The content of the constitutional component derived from the (meth)acrylic compound (M) in the polymer is not particularly limited as long as it is less than 50% by mole; however, it is preferably 0% to 40% by mole and more preferably 5% to 35% by mole.

The (meth)acrylic polymer is not particularly limited; however, it is for example, preferably a polymer obtained by (co)polymerizing at least one (meth)acrylic compound (M) described above. Further, a (meth)acrylic polymer consisting of a copolymer of the (meth)acrylic compound (M) and another polymerizable compound (N) is also preferable. The other polymerizable compound (N) is not particularly limited, and examples thereof include the above-described vinyl compound. The content of the other polymerizable compound (N) in the (meth)acrylic polymer is not particularly limited; however, it can be set to, for example, 50% by mole or less. Examples of the (meth)acrylic polymer include those described in JP6295332B.

The content of the constitutional component in the (meth)acrylic polymer is not particularly limited, and it is, for example, appropriately selected and set in the following range. The above-described content of the polar group-containing constitutional component is as described above.

The content of the constitutional component (including the polar group-containing constitutional component) derived from the (meth)acrylic compound (M) in the (meth)acrylic polymer is not particularly limited and may be set to 100% by mole. In a case where the constitutional component derived from the polymerizable compound (N) is contained,

the content thereof is preferably 1% to 90% by mole, more preferably 10% to 80% by mole, and still more preferably 20% to 70% by mole. The lower limit thereof is particularly preferably more than 50% by mole.

In a case where the (meth)acrylic polymer contains a constitutional component derived from the polymerizable compound (N), the content of this component in the (meth)acrylic polymer is not particularly limited; however, it is preferably 1% by mole or more and 50% by mole or less, more preferably 10% by mole or more and 50% by mole or less, and particularly preferably 20% by mole or more and 50% by mole or less. It is also possible to adopt 10% by mole as the upper limit value.

The binder forming polymer may have a substituent. The substituent is not particularly limited, and examples thereof preferably include a group selected from the following substituent T.

The binder forming polymer can be synthesized by selecting a raw material compound and polymerizing the raw material compound (the monomer) by a known method.

- Substituent T -

The examples are an alkyl group (preferably an alkyl group having 1 to 20 carbon atoms, for example, methyl, ethyl, isopropyl, t-butyl, pentyl, heptyl, 1-ethylpentyl, benzyl, 2-ethoxyethyl, and 1-carboxymethyl), an alkenyl group (preferably an alkenyl group having 2 to 20 carbon atoms, such as vinyl, allyl, andoleyl), an alkynyl group (preferably an alkynyl group having 2 to 20 carbon atoms, for example, ethynyl, butadynyl, and phenylethynyl), a cycloalkyl group (preferably a cycloalkyl group having 3 to 20 carbon atoms, such as cyclopropyl, cyclopentyl, cyclohexyl, and 4-methylcyclohexyl; in the present specification, the alkyl group generally has a meaning including a cycloalkyl group therein when being referred to, however, it will be described separately here), an aryl group (preferably an aryl group having 6 to 26 carbon atoms, such as phenyl, 1-naphthyl, 4-methoxyphenyl, 2-chlorophenyl, and 3-methylphenyl), an aralkyl group (preferably an aralkyl group having 7 to 23 carbon atoms, for example, benzyl or phenethyl), and a heterocyclic group (preferably a heterocyclic group having 2 to 20 carbon atoms and more preferably a 5- or 6-membered heterocyclic group having at least one oxygen atom, one sulfur atom, or one nitrogen atom. The heterocyclic group includes an aromatic heterocyclic group and an aliphatic heterocyclic group. Examples thereof include a tetrahydropyran ring group, a tetrahydrofuran ring group, a 2-pyridyl group, a 4-pyridyl group, a 2-imidazolyl group, a 2-benzimidazolyl group, a 2-thiazolyl group, a 2-oxazolyl group, or a pyrrolidone group); an alkoxy group (preferably an alkoxy group having 1 to 20 carbon atoms, for example, a methoxy group, an ethoxy group, an isopropyloxy group, or a benzyloxy group); an aryloxy group (preferably an aryloxy group having 6 to 26 carbon atoms, for example, a phenoxy group, a 1-naphthyloxy group, a 3-methylphenoxy group, or a 4-methoxyphenoxy group; in the present specification, the aryloxy group has a meaning including an aryloyloxy group therein when being referred to); a heterocyclic oxy group (a group in which an -O- group is bonded to the above-described heterocyclic group), an alkoxycarbonyl group (preferably an alkoxycarbonyl group having 2 to 20 carbon atoms, for example, an ethoxycarbonyl group, a 2-ethylhexyloxycarbonyl group, or a dodecyloxycarbonyl group); an aryloxycarbonyl group (preferably an aryloxycarbonyl group having 6 to 26 carbon atoms, for example, a phenoxycarbonyl group, a 1-naphthyloxycarbonyl group, a 3-methylphenoxycarbonyl group, or a 4-methoxyphenoxycarbonyl group); a heterocyclic oxycarbonyl group (a group in which an - O-CO- group is bonded to the above heterocyclic group); an amino group (preferably an amino group having 0 to 20 carbon atoms, an alkylamino group, or an arylamino group, for example, an amino ($-NH_2$) group, an N,N-dimethylamino group, an N,N-diethylamino group, an N-ethylamino group, or an anilino group); a sulfamoyl group (preferably a sulfamoyl group having 0 to 20 carbon atoms, for example, an N,N-dimethylsulfamoyl group or an N-phenylsufamoyl group); an acyl group (an alkylcarbonyl group, an alkenylcarbonyl group, an alkynylcarbonyl group, an arylcarbonyl group, or a heterocyclic carbonyl group, preferably an acyl group having 1 to 20 carbon atoms, for example, an acetyl group, a propionyl group, a butyryl group, an octanoyl group, a hexadecanoyl group, an acryloyl group, a methacryloyl group, a crotonoyl group, a benzoyl group, a naphthoyl group, or a nicotinoyl group); an acyloxy group (an alkylcarbonyloxy group, an alkenylcarbonyloxy group, an alkynylcarbonyloxy group, an arylcarbonyloxy group, or a heterocyclic carbonyloxy group, preferably an acyloxy group having 1 to 20 carbon atoms, for example, an acetyloxy group, a propionyloxy group, a butyryloxy group, an octanoyloxy group, a hexadecanoyloxy group, an acryloyloxy group, a methacryloyloxy group, a crotonoyloxy group, a benzoyloxy group, a naphthoyloxy group, or a nicotinoyloxy group); an aryloyloxy group (preferably an aryloyloxy group having 7 to 23 carbon atoms, for example, a benzoyloxy group);a carbamoyl group (preferably a carbamoyl group having 1 to 20 carbon atoms, for example, an N,N-dimethylcarbamoyl group or an N-phenylcarbamoyl group); an acylamino group (preferably an acylamino group having 1 to 20 carbon atoms, for example, an acetylamino group or a benzoylamino group); an alkylthio group (preferably an alkylthio group having 1 to 20 carbon atoms, for example, a methylthio group, an ethylthio group, an isopropylthio group, or a benzylthio group); an arylthio group (preferably an arylthio group having 6 to 26 carbon atoms, for example, a phenylthio group, a 1-naphthylthio group, a 3-methylphenylthio group, or a 4-methoxyphenylthio group); a heterocyclic thio group (a group in which an -S- group is bonded to the above-described heterocyclic group), an alkylsulfonyl group (preferably an alkylsulfonyl group having 1 to 20 carbon atoms, for example, a methylsulfonyl group or an ethylsulfonyl group), an arylsulfonyl group (preferably an arylsulfonyl group having 6 to 22 carbon atoms,

for example, a benzene sulfonyl group), an alkylsilyl group (preferably an alkylsilyl group having 1 to 20 carbon atoms, for example, a monomethylsilyl group, a dimethylsilyl group, a trimethylsilyl group, or a triethylsilyl group); an arylsilyl group (preferably an arylsilyl group having 6 to 42 carbon atoms, for example, a triphenylsilyl group), an alkoxysilyl group (preferably an alkoxysilyl group having 1 to 20 carbon atoms, for example, a monomethoxysilyl group, a dimethoxysilyl group, a trimethoxysilyl group, or a triethoxysilyl group), an aryloxysilyl group (preferably an aryloxy group having 6 to 42 carbon atoms, for example, a triphenyloxysilyl group), a phosphate group (preferably a phosphate group having 0 to 20 carbon atoms, for example, $-OP(=O)(R^P)_2$), a phosphonyl group (preferably a phosphonyl group having 0 to 20 carbon atoms, for example, - $P(=O)(R^P)_2$), a phosphinyl group (preferably a phosphinyl group having 0 to 20 carbon atoms, for example, $-P(R^P)_2$), a phosphonate group (preferably a phosphonate group having 0 to 20 carbon atoms, for example, $-PO(OR^P)_2$) a sulfo group (a sulfonate group, $-SO_3R^P$), a hydroxy group, a sulfanyl group, a carboxy group, a cyano group, and a halogen atom (for example, a fluorine atom, a chlorine atom, a bromine atom, or an iodine atom). $R^P$ represents a hydrogen atom or a substituent (preferably a group selected from the substituent T).

In addition, each group exemplified in the substituent T may be further substituted with the substituent T.

The alkyl group, the alkylene group, the alkenyl group, the alkenylene group, the alkynyl group, the alkynylene group, and/or the like may be cyclic or chained, may be linear or branched.

(Physical properties, characteristics, or the like of polymer binder or binder forming polymer)

The polymer binder or the binder forming polymer preferably has the following physical properties or characteristics.

The SP value (unit: $MPa^{1/2}$) of the binder forming polymer is not particularly limited; however, it is, for example, preferably 17.0 to 22.0, more preferably 17.5 to 21.0, and still more preferably 18.0 to 20.0, in terms of the dispersion stability of the solid particles. The SP value of the binder forming polymer can be adjusted according to the kind, content, or the like of the above-described constitutional component.

The SP value of the binder forming polymer is obtained by determining the SP value of each constitutional component as described above and carrying out calculation according to the following expression. The SP value of the constitutional component obtained in accordance with the above document is converted into the SP value ($MPa^{1/2}$) and used.

$$SP_p^2 = (SP_1^2 \times W_1) + (SP_2^2 \times W_2) + \cdots$$

In the expression, $SP_1$, $SP_2$ ··· indicates the SP values of the constitutional components, and $W_1$, $W_2$ ··· indicates the mass fractions of the constitutional components.

In the present invention, the mass fraction of a constitutional component shall be a mass fraction of the constitutional component (the raw material compound from which this constitutional component is derived) in the binder forming polymer.

The water concentration of the polymer binder (the polymer) is preferably 100 ppm (mass basis) or less. Further, as this polymer binder, a polymer may be crystallized and dried, or a polymer binder dispersion liquid may be used as it is.

It is preferable that the binder forming polymer is amorphous. In the present invention, the description that a polymer is "noncrystalline" typically refers to that no endothermic peak due to crystal melting is observed when the measurement is carried out at the glass transition temperature.

The binder forming polymer may be a non-crosslinked polymer or a crosslinked polymer. In addition, in a case where the crosslinking of the polymer progresses due to heating or voltage application, the molecular weight may be higher than the above-described molecular weight. Preferably, the polymer has a mass average molecular weight in the range described below at the start of use of the all-solid state secondary battery.

The mass average molecular weight of the binder forming polymer is not particularly limited. It is, for example, preferably 15,000 or more, more preferably 30,000 or more, and still more preferably 50,000 or more. The upper limit thereof is practically 5,000,000 or less, preferably 4,000,000 or less, more preferably 3,000,000 or less, and still more preferably 1,000,000 or less.

- Measurement of molecular weight -

In the present invention, unless specified otherwise, the molecular weight of the polymer such as polymer or a polymer chain refers to a mass average molecular weight in terms of standard polystyrene conversion, determined by gel permeation chromatography (GPC). The measurement method thereof includes, basically, a method under Conditions 1 or Conditions 2 (preferential) described below. However, depending on the kind of polymer a suitable eluent may be appropriately selected and used.

(Conditions 1)

Column: Connect two TOSOH TSKgel Super AWM-H (product name, manufactured by Tosoh Corporation)
Carrier: 10 mM LiBr/N-methylpyrrolidone
Measurement temperature: 40°C
Carrier flow rate: 1.0 ml/min
Sample concentration: 0.1% by mass
Detector: refractive indicator (RI) detector

(Conditions 2)

Column: A column obtained by connecting TOSOH TSKgel Super HZM-H, TOSOH TSKgel Super HZ4000, and TOSOH TSKgel Super HZ2000 (all of which are product names, manufactured by Tosoh Corporation)
Carrier: tetrahydrofuran
Measurement temperature: 40°C
Carrier flow rate: 1.0 ml/min
Sample concentration: 0.1% by mass
Detector: refractive indicator (RI) detector

The electrode composition according to the embodiment of the present invention may contain one kind of polymer binder or two or more kinds thereof.
The content of the polymer binder in the electrode composition is not particularly limited. However, it is preferably 0.1% to 10.0% by mass, more preferably 0.2% to 8% by mass, still more preferably 0.3% to 6% by mass, and particularly preferably 0.5% to 3% by mass in 100% by mass of the solid content, in terms of dispersion stability, collector adhesiveness, and cycle characteristics.
In the present invention, the mass ratio [(the mass of the sulfide-based inorganic solid electrolyte + the mass of the active material)/(the total mass of the polymer binder)] of the total mass (the total amount) of the sulfide-based inorganic solid electrolyte and the active material to the total mass of the polymer binder in the solid content of 100% by mass is preferably in a range of 1,000 to 1. Furthermore, this ratio is more preferably 500 to 2 and still more preferably 100 to 10.

<Dispersion medium>

The electrode composition according to the embodiment of the present invention contains a dispersion medium that disperses or dissolves each of the above components.
It suffices that the dispersion medium is an organic compound that is in a liquid state in the use environment, examples thereof include various organic solvents, and specific examples thereof include an alcohol compound, an ether compound, an amide compound, an amine compound, a ketone compound, an aromatic compound, an aliphatic compound, a nitrile compound, and an ester compound.
The dispersion medium may be a non-polar dispersion medium (a hydrophobic dispersion medium) or a polar dispersion medium (a hydrophilic dispersion medium); however, a non-polar dispersion medium is preferable from the viewpoint that excellent dispersibility can be exhibited. The non-polar dispersion medium generally refers to a dispersion medium having a property of a low affinity to water; however, in the present invention, examples thereof include an ester compound, a ketone compound, an ether compound, an aromatic compound, and an aliphatic compound.
Examples of the alcohol compound include methyl alcohol, ethyl alcohol, 1-propyl alcohol, 2-propyl alcohol, 2-butanol, ethylene glycol, propylene glycol, glycerin, 1,6-hexanediol, cyclohexanediol, sorbitol, xylitol, 2-methyl-2,4-pentanediol, 1,3-butanediol, and 1,4-butanediol.
Examples of the ether compound include an alkylene glycol (diethylene glycol, triethylene glycol, polyethylene glycol, dipropylene glycol, or the like), an alkylene glycol monoalkyl ether (ethylene glycol monomethyl ether, ethylene glycol monobutyl ether, propylene glycol monomethyl ether, diethylene glycol monomethyl ether, dipropylene glycol monomethyl ether, tripropylene glycol monomethyl ether, diethylene glycol monobutyl ether or the like), alkylene glycol dialkyl ether (ethylene glycol dimethyl ether or the like), a dialkyl ether (dimethyl ether, diethyl ether, diisopropyl ether, dibutyl ether, or the like), and a cyclic ether (tetrahydrofuran, dioxane (including 1,2-, 1,3- or 1,4-isomer), or the like).
Examples of the amide compound include N,N-dimethylformamide, N-methyl-2-pyrrolidone, 2-pyrrolidinone,

1,3-dimethyl-2-imidazolidinone, ε-caprolactam, formamide, N-methylformamide, acetamide, N-methylacetamide, N,N-dimethylacetamide, N-methylpropanamide, and hexamethylphosphoric triamide.

Examples of the amine compound include triethylamine, diisopropylethylamine, and tributylamine.

Examples of the ketone compound include acetone, methyl ethyl ketone, methyl isobutyl ketone (MIBK), cyclopentanone, cyclohexanone, cycloheptanone, dipropyl ketone, dibutyl ketone, diisopropyl ketone (DIPK), diisobutyl ketone (DIBK), isobutyl propyl ketone, sec-butyl propyl ketone, pentyl propyl ketone, and butyl propyl ketone.

Examples of the aromatic compound include benzene, toluene, and xylene.

Examples of the aliphatic compound include hexane, heptane, octane, nonane, decane, dodecane, cyclohexane, methylcyclohexane, ethylcyclohexane, cycloheptane, cyclooctane, decalin, paraffin, gasoline, naphtha, kerosene, and light oil.

Examples of the nitrile compound include acetonitrile, propionitrile, and isobutyronitrile.

Examples of the ester compound include ethyl acetate, butyl acetate, propyl acetate, propyl butyrate, isopropyl butyrate, butyl butyrate, isobutyl butyrate, butyl pentanoate, ethyl isobutyrate, propyl isobutyrate, isopropyl isobutyrate, isobutyl isobutyrate, propyl pivalate, isopropyl pivalate, butyl pivalate, and isobutyl pivalate.

In the present invention, among them, an ether compound, a ketone compound, an aromatic compound, an aliphatic compound, or an ester compound is preferable, and an ester compound, a ketone compound, or an ether compound is more preferable.

The number of carbon atoms of the compound that constitutes the dispersion medium is not particularly limited, and it is preferably 2 to 30, more preferably 4 to 20, still more preferably 6 to 15, and particularly preferably 7 to 12.

In terms of the dispersion stability of the solid particles, the dispersion medium preferably has an SP value (unit: $MPa^{1/2}$) of 14 to 24, more preferably 15 to 22, and still more preferably 16 to 20. The difference (in terms of absolute value) in SP value between the dispersion medium and the polymer binder is not particularly limited; however, it is preferably 3 or less, more preferably 0 to 2, and still more preferably 0 to 1, in that the molecular chain of the polymer that forms the polymer binder is extended in the dispersion medium to improve the dispersibility thereof, whereby the dispersion stability of the solid particles can be further improved. Regarding the above difference (in terms of absolute value) in SP value, in a case where the electrode composition according to the aspect of the present invention contains two or more kinds of binders, at least one kind of binder preferably satisfies the above difference (in terms of absolute value) in SP value, and an aspect in which all the binders satisfy the above difference in SP value (in terms of absolute value) is also one of the preferred aspects.

The SP value of the dispersion medium is defined as a value obtained by converting the SP value calculated according to the Hoy method described above into the unit of $MPa^{1/2}$. In a case where the electrode composition contains two or more kinds of dispersion media, the SP value of the dispersion medium means the SP value of the entire dispersion media, and it is the sum of the products of the SP values and the mass fractions of the respective dispersion media. Specifically, the calculation is carried out in the same manner as the above-described method of calculating the SP value of the polymer, except that the SP value of each of the dispersion media is used instead of the SP value of the constitutional component.

The SP values (unit is omitted) of the dispersion media are shown below.

MIBK (18.4), diisopropyl ether (16.8), dibutyl ether (17.9), diisopropyl ketone (17.9), DIBK (17.9), butyl butyrate (18.6), butyl acetate (18.9), toluene (18.5), ethylcyclohexane (17.1), cyclooctane (18.8), isobutyl ethyl ether (15.3), N-methylpyrrolidone (NMP, 25.4)

The dispersion medium preferably has a boiling point of 50°C or higher and more preferably 70°C or higher at normal pressure (1 atm). The upper limit thereof is preferably 250°C or lower and more preferably 220°C or lower.

The electrode composition according to the embodiment of the present invention may contain only one kind of dispersion medium or may contain two or more kinds thereof.

In the present invention, the content of the dispersion medium in the electrode composition is not particularly limited and can be appropriately set. For example, the content of the dispersion medium in the electrode composition is preferably 20% to 80% by mass, more preferably 30% to 70% by mass, and still more preferably 40% to 60% by mass.

<Conductive auxiliary agent>

The electrode composition according to the embodiment of the present invention preferably contains a conductive auxiliary agent, and for example, it is preferable that the silicon element-containing active material as the negative electrode active material is used in combination with a conductive auxiliary agent.

The conductive auxiliary agent is not particularly limited, and conductive auxiliary agents that are known as ordinary conductive auxiliary agents can be used. It may be, for example, graphite such as natural graphite and artificial graphite, carbon black such as acetylene black, Ketjen black, and furnace black, amorphous carbon such as needle cokes, carbon fibers such as a vapor-grown carbon fiber and a carbon nanotube, or a carbonaceous material such as graphene or fullerene, which are electron-conductive materials, and it may be also a metal powder or metal fiber of

copper, nickel, or the like. A conductive polymer such as polyaniline, polypyrrole, polythiophene, polyacetylene, or a polyphenylene derivative may also be used.

In the present invention, in a case where the active material is used in combination with the conductive auxiliary agent, among the above-described conductive auxiliary agents, a conductive auxiliary agent that does not intercalate and deintercalate ions (preferably Li ions) of a metal belonging to Group 1 or Group 2 in the periodic table and does not function as an active material at the time of charging and discharging of the battery is classified as the conductive auxiliary agent. Therefore, among the conductive auxiliary agents, a conductive auxiliary agent that can function as the active material in the active material layer at the time of charging and discharging of the battery is classified as an active material but not as a conductive auxiliary agent. Whether or not the conductive auxiliary agent functions as the active material at the time of charging and discharging of a battery is not unambiguously determined but is determined by the combination with the active material.

The electrode composition according to the embodiment of the present invention may contain one kind of conductive auxiliary agent or may contain two or more kinds thereof.

The shape of the conductive auxiliary agent is not particularly limited but is preferably a particle shape. The average particle diameter in this case is not particularly limited and is appropriately set. In addition, the specific surface area generally has a value smaller than the specific surface area of the active material described later, which is not limited to this, and it is appropriately set.

In a case where the electrode composition according to the embodiment of the present invention includes the conductive auxiliary agent, the content of the conductive auxiliary agent in the electrode composition is preferably 0% to 10% by mass with respect to 100% by mass of the solid content.

<Inorganic solid electrolyte other than sulfide-based inorganic solid electrolyte>

An inorganic solid electrolyte other than the sulfide-based inorganic solid electrolyte may be contained in the electrode composition according to the embodiment of the present invention. Examples thereof include an oxide-based sulfide-based inorganic solid electrolyte, a halide-based sulfide-based inorganic solid electrolyte, and a hydride-based inorganic solid electrolyte, which are generally used for an all-solid state secondary battery. The content of the inorganic solid electrolyte other than the sulfide-based inorganic solid electrolyte in the electrode composition is not particularly limited and is appropriately set as long as the effect of the present invention is not impaired.

<Lithium salt>

It is also preferable that the electrode composition according to the embodiment of the present invention includes a lithium salt (supporting electrolyte).

Generally, the lithium salt is preferably a lithium salt that is used for this kind of product and is not particularly limited. For example, lithium salts described in paragraphs 0082 to 0085 of JP2015-088486A are preferable.

In a case where the electrode composition according to the embodiment of the present invention contains a lithium salt, the content of the lithium salt is preferably 0.1 part by mass or more and more preferably 5 parts by mass or more with respect to 100 parts by mass of the solid electrolyte. The upper limit thereof is preferably 50 parts by mass or less and more preferably 20 parts by mass or less.

<Dispersing agent>

Since the above-described polymer binder functions as a dispersing agent, the electrode composition according to the embodiment of the present invention may not contain a dispersing agent other than this polymer binder; however, it may contain a dispersing agent. As the dispersing agent, a dispersing agent that is generally used for an all-solid state secondary battery can be appropriately selected and used. Generally, a compound intended for particle adsorption and steric repulsion and/or electrostatic repulsion is suitably used.

<Other additives>

As components other than the respective components described above, the electrode composition according to the embodiment of the present invention may appropriately contain an ionic liquid, a thickener, a crosslinking agent (an agent causing a crosslinking reaction by radical polymerization, condensation polymerization, or ring-opening polymerization), a polymerization initiator (an agent that generates an acid or a radical by heat or light), an antifoaming agent, a leveling agent, a dehydrating agent, or an antioxidant. The ionic liquid is contained in order to further improve the ion conductivity, and the known one in the related art can be used without particular limitation. In addition, a polymer other than the polymer that forms the above-described polymer binder, a typically used binder, or the like may be

contained.

(Preparation of electrode composition)

For the electrode composition according to the embodiment of the present invention, a sulfide-based inorganic solid electrolyte, a polymer binder, an active material, and a dispersion medium, as well as a conductive auxiliary agent, a lithium salt as appropriate, and any other component are mixed by using, for example, various mixers that are generally used. This makes it possible to be prepared as a mixture, preferably as a slurry.

The mixing method is not particularly limited, and the components may be mixed at once or sequentially. A mixing environment is not particularly limited; however, examples thereof include a dry air environment and an inert gas environment.

[Electrode sheet for all-solid state secondary battery]

The electrode sheet for an all-solid state secondary battery according to the embodiment of the present invention (simply, may be also referred to as an electrode sheet) is a sheet-shaped molded body with which an electrode (a laminate of an active material layer and a collector) of an all-solid state secondary battery can be formed, and it includes various aspects depending on use applications thereof.

The electrode sheet according to the embodiment of the present invention has an active material layer formed of the above-described electrode composition according to the embodiment of the present invention on the surface of the collector. As a result, the active material layer is firmly adhered to the collector (the collector adhesiveness is strong), and further, the solid particles are also firmly adhered to each other, whereby the active material layer exhibits strong hardness. In this electrode sheet, the active material layer and the collector can be maintained in an adhered state in an industrial manufacturing method as well, for example, a roll-to-roll method having high productivity and even in a case where the electrode sheet is wound around a winding core during or after manufacturing. Furthermore, the occurrence of defects (chipping, breakage, cracking, peeling, and the like) of the active material layer can be suppressed. In a case of using this electrode sheet as an electrode (a laminate of an active material layer and a collector) of an all-solid state secondary battery, it is possible to impart excellent cycle characteristics to the all-solid state secondary battery.

The electrode sheet according to the embodiment of the present invention may be any electrode sheet having an active material layer on the surface of the collector. In addition, the electrode sheet includes an aspect thereof include an aspect including the collector, the active material layer, and the solid electrolyte layer in this order and an aspect including the collector, the active material layer, the solid electrolyte layer, and the active material layer in this order. The electrode sheet may have another layer in addition to each of the above-described layers. Examples of the other layer include a protective layer (a stripping sheet), a collector, and a coating layer.

The substrate is not particularly limited as long as it can support the active material layer, and examples thereof include a sheet body (plate-shaped body) formed of materials described below regarding the collector, an organic material, an inorganic material, or the like. Examples of the organic materials include various polymers, and specific examples thereof include polyethylene terephthalate, polypropylene, polyethylene, and cellulose. Examples of the inorganic materials include glass and ceramic.

The active material layer provided on the surface of the collector is formed of the electrode composition according to the embodiment of the present invention. In the active material layer formed of the electrode composition according to the embodiment of the present invention, the content of each component is not particularly limited; however, it is preferably synonymous with the content of each component in the solid content of the electrode composition according to the embodiment of the present invention. The thickness of each of the layers forming the electrode sheet according to the embodiment of the present invention is the same as the layer thickness of each of the layers described below regarding the all-solid state secondary battery.

In the present invention, each layer constituting an electrode sheet for an all-solid state secondary battery may have a monolayer structure or a multilayer structure.

It is noted that the constitutional layer such as a solid electrolyte layer is formed of a general material.

[Manufacturing method for electrode sheet for all-solid state secondary battery]

A manufacturing method for an electrode sheet for an all-solid state secondary battery according to the embodiment of the present invention is not particularly limited, and the electrode sheet can be manufactured by forming an active material layer on the surface of a collector using the electrode composition according to the embodiment of the present invention. For example, it includes a method of preferably forming a film (carrying out coating and drying) of the electrode composition according to the embodiment of the present invention on the surface of a collector (a substrate) to form a layer (a coated and dried layer) consisting of the electrode composition. This makes it possible to

produce a sheet having a collector and a coated and dried layer. Here, the coated and dried layer refers to a layer formed by applying the electrode composition according to the embodiment of the present invention and drying the dispersion medium (that is, a layer formed using the electrode composition according to the embodiment of the present invention and made of a composition obtained by removing the dispersion medium from the electrode composition according to the embodiment of the present invention). In the coated and dried layer or the active material layer consisting of the coated and dried layer, the dispersion medium may remain within a range where the effects of the present invention do not deteriorate, and the residual amount thereof, for example, in each of the layers may be 3% by mass or lower. As described above, this coated and dried layer contains a polymer binder.

In the manufacturing method for an electrode sheet for an all-solid state secondary battery according to the embodiment of the present invention, each of the steps such as coating and drying will be described in the following manufacturing method for an all-solid state secondary battery.

In the above-described preferred method, in a case where a film of the electrode composition according to the embodiment of the present invention is formed on a collector to produce an electrode sheet for an all-solid state secondary battery, it is possible to strengthen the adhesion between the collector and the active material layer.

In the manufacturing method for an electrode sheet for an all-solid state secondary battery according to the embodiment of the present invention, it is also possible to pressurize the coated and dried layer. The pressurizing condition and the like will be described later in the manufacturing method for an all-solid state secondary battery.

The obtained coated and dried layer is appropriately subjected to pressurization treatment or the like to become an active material layer.

In addition, in the manufacturing method for an electrode sheet for an all-solid state secondary battery according to the embodiment of the present invention, the substrate, the protective layer (particularly stripping sheet), or the like can also be stripped.

By using the electrode composition according to the embodiment of the present invention, the manufacturing method for an electrode sheet for an all-solid state secondary battery according to the embodiment of the present invention can be applied to an industrial manufacturing method as well, for example, a roll-to-roll method having high productivity and even a method in which the electrode sheet is wound around a winding core during or after manufacturing, whereby an electrode sheet for an all-solid state secondary battery can be manufactured with high productivity.

[All-solid state secondary battery]

The all-solid state secondary battery according to the embodiment of the present invention includes a positive electrode active material layer, a negative electrode active material layer facing the positive electrode active material layer, and a solid electrolyte layer disposed between the positive electrode active material layer and the negative electrode active material layer. The positive electrode active material layer is preferably formed on a positive electrode collector to configure a positive electrode. The negative electrode active material layer is preferably formed on a negative electrode collector to configure a negative electrode.

An aspect in which at least one layer of the negative electrode active material layer or the positive electrode active material layer is formed of the electrode composition according to the aspect of the present invention, or an apect in which both the negative electrode active material layer and the positive electrode active material layer are formed of the electrode composition according to the aspect of the present invention is also one of the preferred aspects. In the present invention, forming the active material layer of the all-solid state secondary battery by using the electrode composition according to the embodiment of the present invention includes an aspect in which a laminate (an electrode) of the active material layer and the collector is formed by using the electrode sheet for an all-solid state secondary battery according to the embodiment of the present invention (however, in a case where layers other than the active material layer formed of the electrode composition according to the embodiment of the present invention and the collector are provided, a sheet from which these layers are removed). In the active material layer formed of the electrode composition according to the embodiment of the present invention, it is preferable that the kinds of components to be included and the content thereof are the same as those of the solid content of the electrode composition according to the embodiment of the present invention. In a case where the active material layer or the solid electrolyte layer is not formed of the electrode composition according to the embodiment of the present invention, a known material in the related art can be used.

The all-solid state secondary battery according to the embodiment of the present invention exhibits excellent cycle characteristics and enables high-speed charging and discharging at a large current in addition to charging and discharging under normal conditions. In addition, it is possible to obtain a large current by exhibiting low resistance and high ion conductivity.

The thickness of each of the negative electrode active material layer, the solid electrolyte layer, and the positive electrode active material layer is not particularly limited. In case of taking a dimension of a general all-solid state secondary battery into account, the thickness of each of the layers is preferably 10 to 1,000 $\mu$m and more preferably 20 $\mu$m or more

and less than 500 μm. In the all-solid state secondary battery according to the embodiment of the present invention, the thickness of at least one layer of the positive electrode active material layer or the negative electrode active material layer is still more preferably 50 μm or more and less than 500 μm.

<Housing>

Depending on the use application, the all-solid state secondary battery according to the embodiment of the present invention may be used as the all-solid state secondary battery having the above-described structure as it is but is preferably sealed in an appropriate housing to be used in the form of a dry cell. The housing may be a metallic housing or a resin (plastic) housing. In a case where a metallic housing is used, examples thereof include an aluminum alloy housing and a stainless steel housing. It is preferable that the metallic housing is classified into a positive electrode-side housing and a negative electrode-side housing and that the positive electrode-side housing and the negative electrode-side housing are electrically connected to the positive electrode collector and the negative electrode collector, respectively. The positive electrode-side housing and the negative electrode-side housing are preferably integrated by being joined together through a gasket for short circuit prevention.

Hereinafter, the all-solid state secondary battery of the preferred embodiments of the present invention will be described with reference to Fig. 1; however, the present invention is not limited thereto.

Fig. 1 is a cross-sectional view schematically illustrating an all-solid state secondary battery (a lithium ion secondary battery) according to a preferred embodiment of the present invention. In the case of being seen from the negative electrode side, an all-solid state secondary battery 10 of the present embodiment includes a negative electrode collector 1, a negative electrode active material layer 2, a solid electrolyte layer 3, a positive electrode active material layer 4, and a positive electrode collector 5 in this order. The respective layers are in contact with each other, and thus structures thereof are adjacent. In a case in which the above-described structure is employed, during charging, electrons ($e^-$) are supplied to the negative electrode side, and lithium ions ($Li^+$) are accumulated on the negative electrode side. On the other hand, during discharging, the lithium ions ($Li^+$) accumulated in the negative electrode side return to the positive electrode, and electrons are supplied to an operation portion 6. In an example illustrated in the drawing, an electric bulb is employed as a model at the operation portion 6 and is lit by discharging. The all-solid state secondary battery 10 exhibits the above-described excellent characteristics.

In a case where the all-solid state secondary battery having a layer constitution illustrated in Fig. 1 is put into a 2032-type coin case, the all-solid state secondary battery will be referred to as the "laminate for an all-solid state secondary battery", and a battery prepared by putting this laminate for an all-solid state secondary battery into a 2032-type coin case (For example, the coin-type all-solid state secondary battery illustrated in Fig. 2) will be referred to as an "all-solid state secondary battery 13", whereby both batteries may be distinctively referred to in some cases.

(Positive electrode active material layer, solid electrolyte layer, and negative electrode active material layer)

In the all-solid state secondary battery 10, the positive electrode active material layer and the negative electrode active material layer are formed of the electrode composition according to the embodiment of the present invention. In other words, the positive electrode in which the positive electrode active material layer and the positive electrode collector are laminated, and the negative electrode in which the negative electrode active material layer and the negative electrode collector are laminated are formed of the electrode sheet according to the embodiment of the present invention.

Between the sulfide-based inorganic solid electrolyte and the polymer binder, which are contained in the positive electrode active material layer 4 and the negative electrode active material layer 2, the kinds thereof may be the same or different from each other, and the specific surface areas of the positive electrode active material and the negative electrode active material may be the same or different from each other.

In the all-solid state secondary battery 10, the negative electrode active material layer can be a lithium metal layer. Examples of the lithium metal layer include a layer formed by depositing or molding a lithium metal powder, a lithium foil, and a lithium vapor deposition film. The thickness of the lithium metal layer can be, for example, 1 to 500 μm regardless of the above thickness of the above negative electrode active material layer.

The positive electrode collector 5 and the negative electrode collector 1 are preferably an electron conductor.

In the present invention, either or both of the positive electrode collector and the negative electrode collector will also be simply referred to as the collector.

As a material that forms the positive electrode collector, not only aluminum, an aluminum alloy, stainless steel, nickel, or titanium but also a material (a material on which a thin film has been formed) obtained by treating the surface of aluminum or stainless steel with carbon, nickel, titanium, or silver is preferable. Among these, aluminum or an aluminum alloy is more preferable.

As a material that forms the negative electrode collector, aluminum, copper, a copper alloy, stainless steel, nickel, titanium, or the like, and further, a material obtained by treating the surface of aluminum, copper, a copper alloy,

or stainless steel with carbon, nickel, titanium, or silver is preferable, and aluminum, copper, a copper alloy, or stainless steel is more preferable.

Regarding the shape of the collector, a film sheet shape is typically used; however, it is also possible to use shapes such as a net shape, a punched shape, a lath body, a porous body, a foaming body, and a molded body of a fiber group.

The thickness of the collector is not particularly limited; however, it is preferably 1 to 500 $\mu$m. In addition, protrusions and recesses are preferably provided on the surface of the collector by carrying out a surface treatment.

In the all-solid state secondary battery 10, a layer formed of a known material can be applied to the solid electrolyte layer as well as active material layer.

In the present invention, a functional layer, a functional member, or the like may be appropriately interposed or disposed between each layer of the negative electrode collector, the negative electrode active material layer, the solid electrolyte layer, the positive electrode active material layer, and the positive electrode collector or on the outside thereof. In addition, each layer may be constituted of a single layer or multiple layers.

[Manufacture of all-solid state secondary battery]

The all-solid state secondary battery can be manufactured by a conventional method. Specifically, the all-solid state secondary battery can be manufactured by forming at least one active material layer by using the electrode composition according to the embodiment of the present invention or the like or forming at least one electrode by using the electrode sheet according to the embodiment of the present invention, and then forming a solid electrolyte layer and appropriately the other active material layer or an electrode by using the known materials.

The all-solid state secondary battery according to the embodiment of the present invention can be manufactured by carrying out a method (a manufacturing method for an electrode sheet for an all-solid state secondary battery according to the embodiment of the present invention) which includes (is carried out through) a step of coating and drying on the surface of the collector with the electrode composition according to the embodiment of the present invention to form a coating film (form a film).

For example, a film of an electrode composition which contains a positive electrode active material and serves as a positive electrode material (a positive electrode composition) is formed on a metal foil which is a positive electrode collector, to form a positive electrode active material layer, thereby producing a positive electrode sheet for an all-solid state secondary battery. Next, a film of the solid electrolyte composition for forming a solid electrolyte layer is formed on the positive electrode active material layer to form the solid electrolyte layer. Furthermore, a film of the electrode composition containing a negative electrode active material as a negative electrode material (a negative electrode composition) is formed on the solid electrolyte layer to form a negative electrode active material layer. A negative electrode collector (a metal foil) is overlaid on the negative electrode active material layer, whereby it is possible to obtain an all-solid state secondary battery having a structure in which the solid electrolyte layer is sandwiched between the positive electrode active material layer and the negative electrode active material layer. A desired all-solid state secondary battery can also be manufactured by enclosing the all-solid state secondary battery in a housing.

In addition, it is also possible to manufacture an all-solid state secondary battery by carrying out the forming method for each layer in reverse order to form a negative electrode active material layer, a solid electrolyte layer, and a positive electrode active material layer on a negative electrode collector and overlaying a positive electrode collector thereon.

As another method, the following method can be exemplified. That is, the positive electrode sheet for an all-solid state secondary battery is produced as described above. In addition, a film of an electrode composition which contains a negative electrode active material and serves as a negative electrode material (a negative electrode composition) is formed on a metal foil which is a negative electrode collector, to form a negative electrode active material layer, thereby producing a negative electrode sheet for an all-solid state secondary battery. Next, a solid electrolyte layer is formed on the active material layer in any one of these sheets as described above. Furthermore, the other one of the positive electrode sheet for an all-solid state secondary battery and the negative electrode sheet for an all-solid state secondary battery is laminated on the solid electrolyte layer such that the solid electrolyte layer and the active material layer come into contact with each other. In this manner, an all-solid state secondary battery can be manufactured.

As still another method, for example, the following method can be used. That is, a positive electrode sheet for an all-solid state secondary battery and a negative electrode sheet for an all-solid state secondary battery are produced as described above. In addition, separately from the positive electrode sheet for an all-solid state secondary battery and the negative electrode sheet for an all-solid state secondary battery, a film of the electrode composition is formed on a substrate, thereby producing a solid electrolyte sheet for an all-solid state secondary battery consisting of a solid electrolyte layer. Furthermore, the positive electrode sheet for an all-solid state secondary battery and the negative electrode sheet for an all-solid state secondary battery are laminated with each other to sandwich the solid electrolyte layer that has been peeled off from the substrate. In this manner, an all-solid state secondary battery can be manufactured.

Further, a positive electrode sheet for an all-solid state secondary battery, a negative electrode sheet for an all-solid state secondary battery, and a solid electrolyte sheet for an all-solid state secondary battery are produced as described above. Next, the positive electrode sheet for an all-solid state secondary battery or negative electrode sheet for an all-solid state secondary battery, and the solid electrolyte sheet for an all-solid state secondary battery are overlaid and pressurized into a state where the positive electrode active material layer or the negative electrode active material layer is brought into contact with the solid electrolyte layer. In this manner, the solid electrolyte layer is transferred to the positive electrode sheet for an all-solid state secondary battery or the negative electrode sheet for an all-solid state secondary battery. Then, the solid electrolyte layer from which the substrate of the solid electrolyte sheet for an all-solid state secondary battery has been peeled off and the negative electrode sheet for an all-solid state secondary battery or positive electrode sheet for an all-solid state secondary battery are overlaid and pressurized (into a state where the negative electrode active material layer or positive electrode active material layer is brought into contact with the solid electrolyte layer). In this manner, an all-solid state secondary battery can be manufactured. The pressurizing method and the pressurizing conditions in this method are not particularly limited, and a method and pressurizing conditions described in the pressurization of the applied composition, which will be described later, can be applied.

The solid electrolyte layer or the like can also be formed by, for example, forming a sulfide-based inorganic solid electrolyte or a solid electrolyte composition on a substrate or an active material layer by pressurization molding under pressurizing conditions described later.

In the above manufacturing method, the electrode composition according to the embodiment of the present invention is used as the electrode composition (at least one of the negative electrode composition or the positive electrode composition) that forms a film on the surface of the collector.

In a case of forming the active material layer with an electrode composition other than the electrode composition according to the embodiment of the present invention, or in a case of forming the solid electrolyte layer, examples of the material thereof include a typically used composition. Further, in each of the above-described manufacturing methods, a lithium metal layer can also be used as a negative electrode (a laminate of a negative electrode active material layer and a negative electrode collector). Further, the negative electrode active material layer can also be formed by binding ions of a metal belonging to Group 1 or Group 2 in the periodic table, which are accumulated on a negative electrode collector during initialization described below or during charging for use, without forming the negative electrode active material layer during the manufacturing of the all-solid state secondary battery to electrons and precipitating the ions on a negative electrode collector or the like as a metal.

<Formation (film formation) of each layer>

The coating method of the electrode composition or the like according to the embodiment of the present invention is not particularly limited and can be appropriately selected. Examples thereof include coating (preferably wet-type coating), spray coating, spin coating, dip coating, slit coating, stripe coating, and bar coating.

The applied composition is preferably subjected to a drying treatment (a heat treatment). The drying treatment may be carried out each time after the electrode composition is applied or may be carried out after it is subjected to multilayer application. The drying temperature is not particularly limited; however, is preferably 30°C or higher, more preferably 60°C or higher, and still more preferably 80°C or higher. The upper limit thereof is not particularly limited; however, it is preferably 300°C or lower, more preferably 250°C or lower, and still more preferably 200°C or lower, for example, in that the damage to each member of the all-solid state secondary battery can be prevented.

After applying the composition, it is preferable to pressurize each layer or the all-solid state secondary battery after superimposing the constitutional layers or producing the all-solid state secondary battery. Examples of the pressurizing methods include a method using a hydraulic cylinder press machine. The pressurizing force is not particularly limited; however, it is generally preferably in a range of 5 to 1,500 MPa.

In addition, the applied electrode composition may be heated while being pressurized. The heating temperature is not particularly limited but is generally in a range of 30°C to 300°C. The press can also be applied at a temperature higher than the glass transition temperature of the sulfide-based inorganic solid electrolyte. It is also possible to carry out press at a temperature higher than the glass transition temperature of the binder forming polymer. However, in general, the temperature does not exceed the melting point of this polymer.

The pressurization may be carried out in a state where the dispersion medium has been dried in advance or in a state where the dispersion medium remains.

The respective compositions may be applied at the same time, and the application, the drying, and the pressing may be carried out simultaneously and/or sequentially. Each of the compositions may be applied onto each of the separate substrates and then laminated by carrying out transfer.

The atmosphere during the manufacturing process, for example, during coating, heating, or pressurization, is not particularly limited and may be any atmosphere such as an atmosphere of atmospheric air, an atmosphere of dried air (the dew point: -20°C or lower), or an atmosphere of an inert gas (for example, an argon gas, a helium gas, or a

nitrogen gas).

The pressurization time may be a short time (for example, within several hours) under the application of a high pressure or a long time (one day or longer) under the application of an intermediate pressure. In case of members other than the electrode sheet for an all-solid state secondary battery, for example, the all-solid state secondary battery, it is also possible to use a restraining device (screw fastening pressure or the like) of the all-solid state secondary battery in order to continuously apply an intermediate pressure.

The pressing pressure may be a pressure that is constant or varies with respect to a portion under pressure such as a sheet surface.

The pressing pressure may be variable depending on the area or the film thickness of the portion under pressure. In addition, the pressure may also be variable stepwise for the same portion.

A pressing surface may be flat or roughened.

<Initialization>

The all-solid state secondary battery manufactured as described above is preferably initialized after the manufacturing or before use. The initialization is not particularly limited, and it is possible to initialize the all-solid state secondary battery by, for example, carrying out initial charging and discharging in a state where the pressing pressure is increased and then releasing the pressure up to a pressure at which the all-solid state secondary battery is ordinarily used.

By using the electrode composition according to the embodiment of the present invention, the manufacturing method for an all-solid state secondary battery according to the embodiment of the present invention can be applied to an industrial manufacturing method as well, for example, a roll-to-roll method having high productivity and even a method in which the electrode sheet is wound around a winding core during or after manufacturing, whereby an all-solid state secondary battery that realizes excellent battery performance described above can be manufactured with high productivity.

[Usages of all-solid state secondary battery]

The all-solid state secondary battery according to the embodiment of the present invention can be applied to a variety of usages. The application aspect thereof is not particularly limited, and in a case of being mounted in an electronic apparatus, examples thereof include a notebook computer, a pen-based input personal computer, a mobile personal computer, an e-book player, a mobile phone, a cordless phone handset, a pager, a handy terminal, a portable fax, a mobile copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, and a backup power supply. Additionally, examples of the consumer usage thereof include an automobile, an electric vehicle, a motor, a lighting instrument, a toy, a game device, a road conditioner, a watch, a strobe, a camera, and a medical device (a pacemaker, a hearing aid, a shoulder massage device, and the like). Furthermore, the all-solid state secondary battery can be used for a variety of military usages and universe usages. In addition, the all-solid state secondary battery can also be combined with a solar battery,

Examples

Hereinafter, the present invention will be described in more detail based on Examples; however, the present invention is not limited thereto to be interpreted. "Parts" and "%" that represent compositions in the following Examples are mass-based unless particularly otherwise described. In the present invention, "room temperature" means 25°C.

1. Polymer synthesis and preparation of binder solution or dispersion liquid

Polymers S-1 to S-10 and T-1 and T-2 shown in the following chemical formulae and Table 1 were synthesized as follows to form binder solutions or dispersion liquids S-1 to S-10, T-1, and, T-2 were prepared respectively.

[Synthesis Example 1: Synthesis of polymer S-1 (preparation of binder dispersion liquid S-1)]

To a 100 mL graduated cylinder, 27.0 g of 2-(2-methoxyethoxy)ethyl methacrylate (manufactured by Tokyo Chemical Industry Co., Ltd.), 9.0 g of dodecyl methacrylate (manufactured by Tokyo Chemical Industry Co., Ltd.), and 0.36 g of a polymerization initiator V-601 (product name, manufactured by FUJIFILM Wako Pure Chemical Corporation) were added and dissolved in 36 g of butyl butyrate to prepare a monomer solution.

To a 300 mL three-necked flask, 18 g of butyl butyrate was added and stirred at 80°C, and then the above

monomer solution was added dropwise thereto over 2 hours. After completion of the dropwise addition, the temperature was raised to 90°C, and stirring was carried out for 2 hours to synthesize a polymer S-1 (a methacrylic polymer), whereby a binder dispersion liquid S-1 (concentration: 40% by mass) consisting of the polymer S-1 was obtained. The average particle diameter of the binder S-1 in this dispersion liquid was 360 nm.

[Synthesis Examples 2 to 10: Synthesis of polymers S-2 to S-10 (preparation of binder solutions S-2 to S-10)]

Each of polymers S-2 to S-6, S-8, and S-9 ((meth)acrylic polymers), and polymers S-7 and S-10 (vinyl polymers) was synthesized in the same manner as in Synthesis Example 1, and each of binder solutions S-2 to S-10 (concentration: 40% by mass) consisting of the respective polymers was obtained except that in Synthesis Example 1, a compound from which each constitutional component is derived was used so that each of the polymers S-2 to S-10 had the composition (the kind and the content of the constitutional component) shown in the following chemical formulae and Table 1.

[Synthesis Example 11: Synthesis of polymer T-1 (preparation of binder dispersion liquid T-1)]

To a 200 mL Erlenmeyer flask, 60 g of 4,4'-(hexafluoroisopropyridene)diphthalic acid anhydride (manufactured by Tokyo Chemical Industry Co., Ltd.) and 39.3 g of N-methylpyrrolidone (NMP) were added, and the resultant mixture was stirred to obtain a solution.

To a 500 mL three-necked flask, 27.0 g of 4,4'-diaminodiphenyl ether (manufactured by Tokyo Chemical Industry Co., Ltd.) and 90 g of NMP were added and dissolved by stirring, and then the NMP solution of 4,4'-(hexafluoroisopropyridene)diphthalic acid anhydride was added thereto so that the temperature in the reaction system did not exceed 60°C. After adding the whole of this NMP solution, stirring was carried out for 4 hours to obtain an NMP solution (concentration: 40% by mass) of the polymer.

Next, to a 500 mL three-necked eggplant flask, 10 g of an NMP solution of the polymer and 30 g of NMP were added thereto and stirred, and then 316 g of butyl butyrate was added dropwise over 1 hour. The obtained dispersion liquid was transferred to a 1 L separatory funnel, washed 3 times with 250 g of water, and then dried with sodium sulfate.

In this way, a polymer T-1 (polyimide) was synthesized to obtain a binder dispersion liquid T-1 (concentration: 1.3% by mass) consisting of the polymer T-1.

The average particle diameter of the binder T-1 in this dispersion liquid was 530 nm.

[Synthesis Example 12: Synthesis of polymer T-2 (preparation of binder solution T-2)]

A polymer T-2 (an acrylic polymer) was synthesized in the same manner as in Synthesis Example 1, and a binder solution T-2 (concentration: 40% by mass) consisting of the polymer T-2 was obtained except that in Synthesis Example 1, a compound from which each constitutional component is derived was used so that the polymer T-2 had the composition (the kind and the content of the constitutional component) shown in the following chemical formula and Table 1.

Polymers S-1 to S-10, T-1, and T-2 are shown below.

The number at the bottom right of each constitutional component indicates the content (% by mole) in the polymer.

S-1

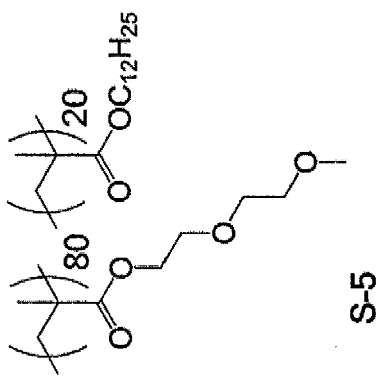

S-2

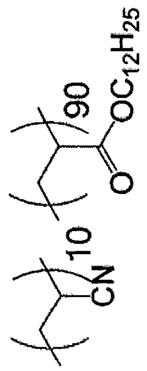

S-3

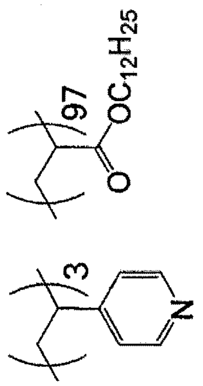

S-4

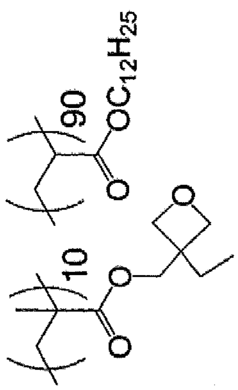

S-5

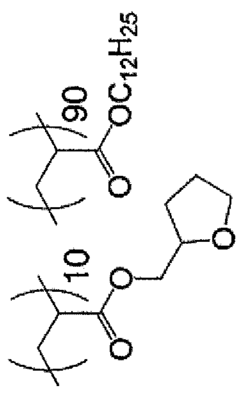

S-6

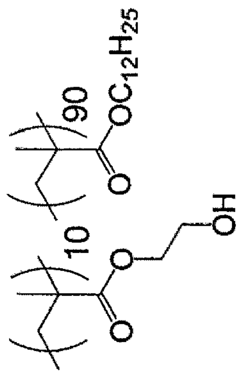

S-7

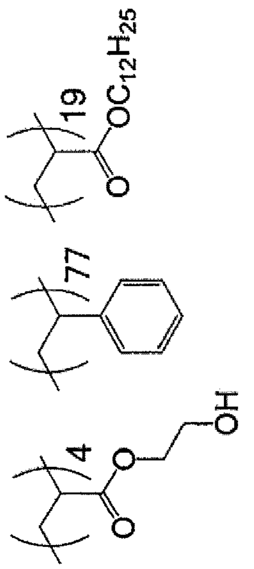

T-1

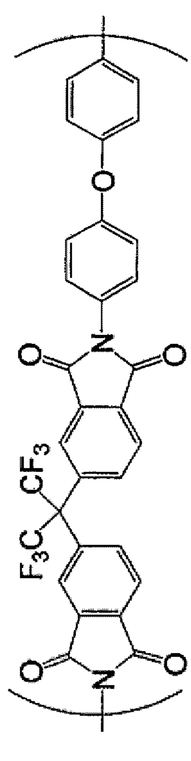

T-2

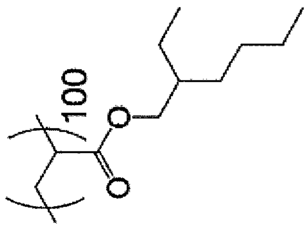

S-8

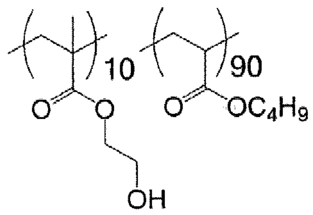

S-9

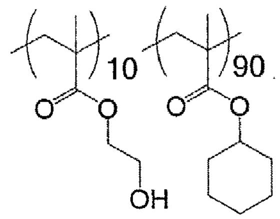

S-10

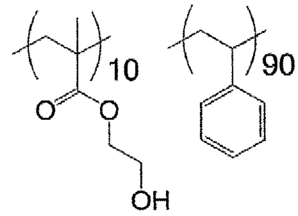

Table 1 shows the composition, SP value, mass average molecular weight, SP value of each constitutional component of the synthesized polymer, and average particle diameter of the binder, as well as the form (solution or dispersion liquid) of the binder in the composition described later. The SP value of the polymer and each constitutional component, the mass average molecular weight of the polymer, and the average particle diameter of the binder were measured or calculated according to the above methods. In a case where two kinds of constitutional components corresponding to the specific constitutional component are contained, they are indicated together in two stages. The form of the binder was visually determined; however, the binder described as "Dissolved" in the table satisfied the solubility according to the solubility measurement.

[Table 1]

| No. | Constitutional component M1 | | | Constitutional component M2 | | | SP Value ($MPa^{1/2}$) | Mass Average Molecular Weight | Average Particle Diameter | Form |
|---|---|---|---|---|---|---|---|---|---|---|
| | | SP Value ($MPa^{1/2}$) | Content (% by mole) | | SP Value ($MPa^{1/2}$) | Content (% by mole) | | | | |
| S-1 | LMA | 18.5 | 20 | DGMEM | 20.4 | 80 | 19.9 | 68000 | 360 | Dispersion liquid |
| S-2 | LA | 18.8 | 90 | AN | 25.3 | 10 | 18.9 | 89000 | - | Solution |
| S-3 | LA | 18.8 | 97 | VP | 22.3 | 3 | 18.8 | 56000 | - | Solution |
| S-4 | LA | 18.8 | 90 | OXE-30 | 20.8 | 10 | 18.9 | 77000 | - | Solution |
| S-5 | LA | 18.8 | 90 | THFA | 21.4 | 10 | 18.9 | 66000 | - | Solution |
| S-6 | LMA | 18.5 | 90 | HEM | 24.2 | 10 | 18.8 | 34000 | - | Solution |
| S-8 | - | - | - | HEM<br>BA | 19.8 | 90 | 20.2 | 45000 | - | Solution |
| S-9 | - | - | - | HEM<br>cHMA | 19.0 | 90 | 19.5 | 38000 | - | Solution |
| S-10 | - | - | - | HEM<br>St | 19.3 | 90 | 19.8 | 40000 | - | Solution |
| S-7 | LA | 18.8 | 19 | HEA<br>St | 25.9 19.3 | 4 77 | 19.4 | 51000 | - | Solution |
| T-1 | 6FDA<br>DAE | 20.9<br>23.8 | 50<br>50 | - | - | - | 22.8 | 160000 | 530 | Dispersion liquid |
| T-2 | EtHexA | 18.7 | 100 | - | - | - | 18.7 | 62000 | - | Solution |

<Abbreviations in table>

In the table, "-" in the column of the constitutional component indicates that the constitutional component does not have a corresponding constitutional component.
The unit of the SP value of each constitutional component shown below is $MPa^{1/2}$.

- Constitutional component M1 -

The component M1 indicates another component such as a constitutional component having an SP value of less than 19.0 $MPa^{1/2}$.

LMA: Dodecyl methacrylate (manufactured by Tokyo Chemical Industry Co., Ltd.)
LA: Dodecyl acrylate (manufactured by Tokyo Chemical Industry Co., Ltd.)
6FDA: 4,4'-(hexafluoroisopropylidene)diphthalic acid anhydride (manufactured by Tokyo Chemical Industry Co., Ltd.)
DAE: 4,4'-diaminodiphenyl ether (manufactured by Tokyo Chemical Industry Co., Ltd.)
EtHexA: 2-ethylhexyl acrylate, manufactured by Tokyo Chemical Industry Co., Ltd.)

- Constitutional component M2 -

The component M2 indicates a constitutional component derived from a (meth)acrylic monomer or a vinyl monomer, which has an SP value of 19.0 $MPa^{1/2}$ or more.

DGMEM: 2-(2-methoxyethoxy)ethyl methacrylate (manufactured by Tokyo Chemical Industry Co., Ltd.)
AN: Acrylonitrile (manufactured by Fujifilm Wako Pure Chemical Corporation)
VP: Vinyl pyridine (manufactured by Tokyo Chemical Industry Co., Ltd.)
OXE-30: (3-ethyloxetane-3-yl)methylmethacrylate (manufactured by Osaka Organic Chemical Industry Ltd.)
THFA: Tetrahydrofurfuryl acrylate (manufactured by FUJIFILM Wako Pure Chemical Corporation)
HEM: 2-hydroxyethyl acrylate (manufactured by FUJIFILM Wako Pure Chemical Corporation)
HEA: 2-Hydroxyethyl acrylate (manufactured by FUJIFILM Wako Pure Chemical Corporation)
St: Styrene (manufactured by FUJIFILM Wako Pure Chemical Corporation)
BA: Butyl acrylate (manufactured by Tokyo Chemical Industry Co., Ltd.)
cHMA: Cyclohexyl methacrylate (manufactured by Tokyo Chemical Industry Co., Ltd.)

2. Preparation of active material

(1) The following $LiNi_{1/3}Co_{1/3}Mn_{1/3}O_2$ (NMC) was prepared as the positive electrode active material.

NMC1: NMC having a specific surface area of 13 $m^2/g$ and an average particle diameter of 0.3 $\mu m$ (manufactured by Toshima Manufacturing Co., Ltd.)
NMC2: NMC (manufactured by Sigma-Aldrich Co., LLC) having a specific surface area of 4 $m^2/g$ and an average particle diameter of 1.0 $\mu m$.

(2) The following Si was prepared as the negative electrode active material.

Si1: Si having a specific surface area of 23 $m^2/g$ and an average particle diameter of 0.1 $\mu m$ (manufactured by Sigma-Aldrich Co., LLC)
Si2: Si having a specific surface area of 2 $m^2/g$ and an average particle diameter of 2.8 $\mu m$ (manufactured by Alfa Aesar)

3. Synthesis of sulfide-based inorganic solid electrolyte

[Synthesis Example A]

A sulfide-based inorganic solid electrolyte was synthesized with reference to a non-patent document of T. Ohtomo, A. Hayashi, M. Tatsumisago, Y. Tsuchida, S. Hama, K. Kawamoto, Journal of Power Sources, 233, (2013),

pp. 231 to 235 and A. Hayashi, S. Hama, H. Morimoto, M. Tatsumisago, T. Minami, Chem. Lett., (2001), pp. 872 and 873.

Specifically, in a globe box under an argon atmosphere (dew point: -70°C), lithium sulfide ($Li_2S$, manufactured by Sigma-Aldrich Co., LLC Co., LLC Co., LLC, purity: > 99.98%) (2.42 g) and diphosphorus pentasulfide ($P_2S_5$, manufactured by Sigma-Aldrich Co., LLC Co., LLC Co., LLC, purity: > 99%) (3.90 g) each were weighed, put into an agate mortar, and mixed using an agate pestle for five minutes. The mixing ratio between $Li_2S$ and $P_2S_5$ ($Li_2S:P_2S_5$) was set to 75:25 in terms of molar ratio.

Next, 66 g of zirconia beads having a diameter of 5 mm were put into a 45 mL container made of zirconia (manufactured by FRITSCH), the entire amount of the mixture of the above lithium sulfide and the diphosphorus pentasulfide was put thereinto, and the container was completely sealed in an argon atmosphere. The container was set in a planetary ball mill P-7 manufactured by FRITSCH (product name, manufactured by FRITSCH), mechanical milling was carried out at a temperature of 25°C and a rotation speed of 720 rpm for 24 hours, thereby obtaining yellow powder (6.20 g) of a sulfide-based inorganic solid electrolyte (Li-P-S-based glass, hereinafter, may be referred to as LPS). The average particle diameter of the Li-P-S-based glass was 11 μm, and the specific surface area thereof was 0.8 $m^2/g$.

[Example 1]

Each electrode composition shown in Table 2 was prepared as follows.

<Preparation of positive electrode composition>

60 g of zirconia beads having a diameter of 5 mm were put into a 45 mL container made of zirconia (manufactured by FRITSCH), and then 9.9 g of LPS synthesized in Synthesis Example A, and 14 g (total amount) of butyl butyrate as a dispersion medium were put into the above container. The container was set in a planetary ball mill P-7 (product name, manufactured by FRITSCH) and the components were stirred for 30 minutes at 25°C and a rotation speed of 200 rpm. Then, Into this container, 25.2 g of the positive electrode active material shown in Table 2, 0.72 g of acetylene black (AB, average diameter diameter: 2.3 μm, manufactured by Denka Co., Ltd.) as the conductive auxiliary agent, and 0.18 g (solid content mass) of the binder solution or dispersion liquid shown in Table 2 was put, the container was set in a planetary ball mill P-7, and mixing was continued for 30 minutes at a temperature of 25°C and a rotation speed of 200 rpm to prepare each of positive electrode compositions (slurries) PK-1 to PK-10 and PKc 11.

<Preparation of negative electrode composition>

60 g of zirconia beads having a diameter of 5 mm was put into a 45 mL container made of zirconia (manufactured by FRITSCH), and 8.7 g of LPS synthesized in the above Synthesis Example A, 0.1 g (solid content mass) of the binder solution or dispersion liquid shown in Table 2, and 20.8 g (total amount) of the dispersion medium shown in Table 2 were put thereinto. The container was set in a planetary ball mill P-7 (product name, manufactured by FRITSCH) and the components were mixed for 60 minutes at a temperature of 25°C and a rotation speed of 300 rpm. Then, 9.6 g of the negative electrode active material shown in Table 2 and 0.8 g of VGCF (average particle diameter: 0.8 μm, manufactured by Showa Denko K.K.) as the conductive auxiliary agent were put into the container. Similarly, the container was subsequently set in a planetary ball mill P-7, and mixing was carried out at a temperature of 25°C for 10 minutes at a rotation speed of 100 rpm to prepare each of negative electrode compositions (slurries) NK-1 to NK-10 and NKc21 to NKc23.

[Table 2]

| | Composition No. | Inorganic Solid Electrolyte | | | Binder Solution or Dispersion Liquid | | | Dispersion Liquid | | | Active Material | | | | Conductive Auxiliary Agent | | | Note |
|---|---|---|---|---|---|---|---|---|---|---|---|---|---|---|---|---|---|---|
| | | | Composition Content | Solid Content Content | | Composition Content | Solid Content Content | | Composition Content | SP Value Difference | | Specific Surface Area | Composition Content | Solid Content Content | | Composition Content | Solid Content Content | |
| Composition for Positive Electrode | PK-1 | LPS | 19.8 | 27.5 | S-1 | 0.4 | 0.5 | Butyl butyrate | 28.0 | 1.3 | NMC1 | 13 | 50.4 | 70.0 | AB | 1.4 | 2.0 | Present invention |
| | PK-2 | LPS | 19.8 | 27.5 | S-2 | 0.4 | 0.5 | Butyl butyrate | 28.0 | 0.3 | NMC1 | 13 | 50.4 | 70.0 | AB | 1.4 | 2.0 | Present invention |
| | PK-3 | LPS | 19.8 | 27.5 | S-3 | 0.4 | 0.5 | Butyl butyrate | 28.0 | 0.2 | NMC1 | 13 | 50.4 | 70.0 | AB | 1.4 | 2.0 | Present invention |
| | PK-4 | LPS | 19.8 | 27.5 | S-4 | 0.4 | 0.5 | Butyl butyrate | 28.0 | 0.3 | NMC1 | 13 | 50.4 | 70.0 | AB | 1.4 | 2.0 | Present invention |
| | PK-7 | LPS | 19.8 | 27.5 | S-5 | 0.4 | 0.5 | Butyl butyrate | 28.0 | 0.3 | NMC1 | 13 | 50.4 | 70.0 | AB | 1.4 | 2.0 | Present invention |
| | PK-5 | LPS | 19.8 | 27.5 | S-6 | 0.4 | 0.5 | Butyl butyrate | 28.0 | 0.2 | NMC1 | 13 | 50.4 | 70.0 | AB | 1.4 | 2.0 | Present invention |
| | PK-8 | LPS | 19.8 | 27.5 | S-8 | 0.4 | 0.5 | Butyl butyrate | 28.0 | 1.6 | NMC1 | 13 | 50.4 | 70.0 | AB | 1.4 | 2.0 | Present invention |
| | PK-9 | LPS | 19.8 | 27.5 | S-9 | 0.4 | 0.5 | Butyl butyrate | 28.0 | 0.9 | NMC1 | 13 | 50.4 | 70.0 | AB | 1.4 | 2.0 | Present invention |
| | PK-10 | LPS | 19.8 | 27.5 | S-10 | 0.4 | 0.5 | Butyl butyrate | 28.0 | 1.2 | NMC1 | 13 | 50.4 | 70.0 | AB | 1.4 | 2.0 | Present invention |
| | PK-6 | LPS | 19.8 | 27.5 | S-7 | 0.4 | 0.5 | Butyl butyrate | 28.0 | 0.8 | NMC1 | 13 | 50.4 | 70.0 | AB | 1.4 | 2.0 | Present invention |
| | PKc11 | LPS | 19.8 | 27.5 | S-1 | 0.4 | 0.5 | Butyl butyrate | 28.0 | 1.3 | NMC2 | 4 | 50.4 | 70.0 | AB | 1.4 | 2.0 | Comparative Example |
| Composition for Negative Electrode | NK-1 | LPS | 21.8 | 45.5 | S-1 | 0.2 | 0.5 | Butyl butyrate | 52.0 | 1.3 | Si1 | 23 | 24.0 | 50.0 | VGCF | 2.0 | 4.0 | Present invention |
| | NK-2 | LPS | 21.8 | 45.5 | S-2 | 0.2 | 0.5 | Butyl butyrate | 52.0 | 0.3 | Si1 | 23 | 24.0 | 50.0 | VGCF | 2.0 | 4.0 | Present invention |
| | NK-3 | LPS | 21.8 | 45.5 | S-3 | 0.2 | 0.5 | Butyl butyrate | 52.0 | 0.2 | Si1 | 23 | 24.0 | 50.0 | VGCF | 2.0 | 4.0 | Present invention |
| | NK-4 | LPS | 21.8 | 45.5 | S-4 | 0.2 | 0.5 | Butyl butyrate | 52.0 | 0.3 | Si1 | 23 | 24.0 | 50.0 | VGCF | 2.0 | 4.0 | Present invention |
| | NK-7 | LPS | 21.8 | 45.5 | S-5 | 0.2 | 0.5 | Butyl butyrate | 52.0 | 0.3 | Si1 | 23 | 24.0 | 50.0 | VGCF | 2.0 | 4.0 | Present invention |
| | NK-5 | LPS | 21.8 | 45.5 | S-6 | 0.2 | 0.5 | Butyl butyrate | 52.0 | 0.2 | Si1 | 23 | 24.0 | 50.0 | VGCF | 2.0 | 4.0 | Present invention |
| | NK-8 | LPS | 21.8 | 45.5 | S-8 | 0.2 | 0.5 | Butyl butyrate | 52.0 | 1.6 | Si1 | 23 | 24.0 | 50.0 | VGCF | 2.0 | 4.0 | Present invention |
| | NK-9 | LPS | 21.8 | 45.5 | S-9 | 0.2 | 0.5 | Butyl butyrate | 52.0 | 0.9 | Si1 | 23 | 24.0 | 50.0 | VGCF | 2.0 | 4.0 | Present invention |
| | NK-10 | LPS | 21.8 | 45.5 | S-10 | 0.2 | 0.5 | Butyl butyrate | 52.0 | 1.2 | Si1 | 23 | 24.0 | 50.0 | VGCF | 2.0 | 4.0 | Present invention |
| | NK-6 | LPS | 21.8 | 45.5 | S-7 | 0.2 | 0.5 | Butyl butyrate | 52.0 | 0.8 | Si1 | 23 | 24.0 | 50.0 | VGCF | 2.0 | 4.0 | Present invention |
| | NKc21 | LPS | 21.8 | 45.5 | S-1 | 0.2 | 0.5 | Butyl butyrate | 52.0 | 1.3 | Si2 | 2 | 24.0 | 50.0 | VGCF | 2.0 | 4.0 | Comparative Example |
| | NKc22 | LPS | 21.8 | 45.5 | T-1 | 0.2 | 0.5 | Butyl butyrate | 52.0 | 4.2 | Si1 | 23 | 24.0 | 50.0 | VGCF | 2.0 | 4.0 | Comparative Example |
| | NKc23 | LPS | 21.8 | 45.5 | T-2 | 0.2 | 0.5 | Butyl butyrate | 52.0 | 0.1 | Si1 | 23 | 24.0 | 50.0 | VGCF | 2.0 | 4.0 | Comparative Example |

<Abbreviations in table>

The composition content indicates the content (% by mass) with respect to the total amount of the composition, and the content of the solid content indicates the content (% by mass) with respect to 100% by mass of the solid content of the composition.

NMC1 and NMC2: NMC prepared above
Si1 and Si2: Si prepared above
AB: Acetylene black (specific surface area is 62 $m^2/g$)
VGCF: Carbon nanotube (specific surface area is 13 $m^2/g$)

<Evaluation 1: Dispersion stability test>

The dispersion stability of each of the prepared compositions was evaluated as follows.
Each of the prepared compositions (slurries) was put into a glass test tube having a diameter of 10 mm and a height of 4 cm up to a height of 4 cm and allowed to stand at 25°C for 4 days. The solid content ratio between the solid contents before and after allowing the standing was calculated with the slurry within 1 cm from the slurry liquid surface. Specifically, immediately after allowing the standing, the liquid down to 1 cm below the slurry liquid surface was taken out and dried by heating in an aluminum cup at 120°C for 2 hours. Then, the mass of the solid content in the cup was measured to determine the solid content before and after allowing standing. The solid content obtained in this manner were used to determine the solid content ratio [WA/WB] of the solid content WA after allowing standing to the solid content WB before allowing standing.
The ease of sedimentation (precipitation) of the solid particles was evaluated as the dispersion stability of the solid electrolyte composition by determining where the above solid content ratio is included in any of the following evaluation standards. In this test, it is indicated that the closer the solid content ratio is to 1.0, the better the dispersion stability is, and the evaluation standard "D" or higher is the pass level. The results are shown in Table 3.
It is noted that the composition according to the embodiment of the present invention had sufficient dispersibility immediately after preparation as an electrode forming material.

- Evaluation standards -

A: $0.9 \leq$ solid content ratio $\leq 1.0$
B: $0.8 \leq$ solid content ratio $< 0.9$
C: $0.7 \leq$ solid content ratio $< 0.8$
D: $0.6 \leq$ solid content ratio $< 0.7$
E: $0.5 \leq$ solid content ratio $< 0.6$
F: solid content ratio $< 0.5$

<Production of positive electrode sheet for all-solid state secondary battery>

Each of the positive electrode compositions obtained as described above, which is shown in the column of "Electrode composition" in Table 3, was applied onto an aluminum foil having a thickness of 20 μm by using a baker type applicator (product name: SA-201), heating was carried out at 80°C for 1 hour, and then heating was further carried out at 110°C for 1 hour to dry (to remove the dispersion medium) the positive electrode composition. Then, using a heat press machine, the dried positive electrode composition was pressurized (20 MPa, 1 minute) at 25°C to produce each of positive electrode sheets 101 to 106, 113 to 116, and c11 for an all-solid state secondary battery, having a positive electrode active material layer having a film thickness of 75 μm (in Table 3, it is written as "Positive electrode sheet").

<Production of negative electrode sheet for all-solid state secondary battery>

Each of the negative electrode compositions obtained as described above, which is shown in the column of "Electrode composition" in Table 3, was applied onto a copper foil having a thickness of 20 μm by using a baker type applicator (product name: SA-201), heating was carried out at 80°C for 1 hour, and then heating was further carried out at 110°C for 1 hour to dry (to remove the dispersion medium) the negative electrode composition. Then, using a heat press machine, the dried negative electrode composition was pressurized (20 MPa, 1 minute) at 25°C to produce each of negative electrode sheets 107 to 112, 117 to 120, and c21 to c23 for an all-solid state secondary battery, having a

negative electrode active material layer having a film thickness of 60 μm (in Table 3, it is written as "Negative electrode sheet").

<Evaluation 2: Adhesiveness of collector>

The prepared sheets 101 to 120, c11, and c21 to c23 were cut out into a rectangle having a width of 3 cm and a length of 14 cm. The cut sheets were bent using a cylindrical mandrel tester "Product Code 056" (mandrel diameter: 10 mm, manufactured by Allgood Plc.) according to Japanese Industrial Standards (JIS) K5600-5-1 (bend resistance (cylindrical mandrel: a test using a test machine type 2); the same test as that of International Standards (ISO) 1519). It is noted that the test piece was set so that the active material layer thereof was placed on a side opposite to the mandrel (the collector was placed on the side of the mandrel side) and the width direction was parallel to the axis line of the mandrel. The test was carried out by changing the diameter of the mandrel in the order of 32 mm, 25 mm, 19 mm, 16 mm, 12 mm, 10 mm, 6 mm, 5 mm, 3 mm, and 2 mm, the minimum diameter at which the active material layer did not separate from the current collector (the aluminum foil or the copper foil) was measured, and the evaluation was carried out by determining which evaluation standard below is satisfied by the minimum diameter.
In this test, it is indicated that the smaller the minimum diameter is, the stronger the adhesion between the active material layer and the collector is, and the evaluation standard "D" or higher is the pass level. The results are shown in Table 3.

- Evaluation standards -

A: 2 mm
B: 3 mm or 5 mm
C: 6 mm or 10 mm
D: 12 mm or 16 mm
E: 19 mm or 25 mm
F: 32 mm

[Table 3]

| Sheet No. | Electrode Composition | Binder Polymer | Dispersion Stability | Collector Adhesiveness | Note 1 | Note 2 |
|---|---|---|---|---|---|---|
| 101 | PK-1 | S-1 | B | C | Positive electrode sheet | Present invention |
| 102 | PK-2 | S-2 | A | C | | Present invention |
| 103 | PK-3 | S-3 | A | B | | Present invention |
| 104 | PK-4 | S-4 | A | A | | Present invention |
| 113 | PK-7 | S-5 | A | A | | Present invention |
| 105 | PK-5 | S-6 | A | A | | Present invention |
| 114 | PK-8 | S-8 | B | B | | Present invention |
| 115 | PK-9 | S-9 | B | B | | Present invention |
| 116 | PK-10 | S-10 | B | B | | Present invention |
| 106 | PK-6 | S-7 | A | A | | Present invention |
| C11 | PKc11 | T-1 | F | F | | Comparative Example |

(continued)

| Sheet No. | Electrode Composition | Binder Polymer | Dispersion Stability | Collector Adhesiveness | Note 1 | Note 2 |
|---|---|---|---|---|---|---|
| 107 | NK-1 | S-1 | B | C | Negative electrode sheet | Present invention |
| 108 | NK-2 | S-2 | A | C | | Present invention |
| 109 | NK-3 | S-3 | A | B | | Present invention |
| 110 | NK-4 | S-4 | A | A | | Present invention |
| 117 | NK-7 | S-5 | A | A | | Present invention |
| 111 | NK-5 | S-6 | A | A | | Present invention |
| 118 | NK-8 | S-8 | B | B | | Present invention |
| 119 | NK-9 | S-9 | B | B | | Present invention |
| 120 | NK-10 | S-10 | B | B | | Present invention |
| 112 | NK-6 | S-7 | A | A | | Present invention |
| c21 | NKc21 | S-1 | F | F | | Comparative Example |
| c22 | NKc22 | T-1 | F | F | | Comparative Example |
| c23 | NKc23 | T-2 | F | F | | Comparative Example |

<Manufacturing of all-solid state secondary battery>

(Production of positive electrode sheet for all-solid state secondary battery, which has solid electrolyte layer)

Next, a solid electrolyte sheet 201 for an all-solid state secondary battery, produced as described below, was overlaid on the positive electrode active material layer of each of the positive electrode sheets for an all-solid state secondary battery shown in the column of "Electrode active material layer" of Table 4 so that the solid electrolyte layer came into contact with the positive electrode active material layer, transferred (laminated) by being pressurized (50 MPa) and 25°C using a press machine, and then further pressurized (600 MPa)and at 25°C, whereby each of positive electrode sheets 101 to 106, 113 to 116, and c11 for an all-solid state secondary battery having a thickness of 30 μm (thickness of positive electrode active material layer: 55 μm) was produced.

<Production of negative electrode sheet for all-solid state secondary battery, which has solid electrolyte layer>

Next, a solid electrolyte sheet 201 for an all-solid state secondary battery, produced as described below, was overlaid on the negative electrode active material layer of each of the negative electrode sheets for an all-solid state secondary battery shown in the column of "Electrode active material layer" of Table 4 so that the solid electrolyte layer came into contact with the negative electrode active material layer, transferred (laminated) by being pressurized (50 MPa) and 25°C using a press machine, and then further pressurized (600 MPa)and at 25°C, whereby each of negative electrode sheets 107 to 112, 117 to 120, and c21 to c23 for an all-solid state secondary battery having a thickness of 30 μm (thickness of negative electrode active material layer: 42 μm) was produced.

A solid electrolyte sheet 201 for an all-solid state secondary battery to be used in the manufacturing of the all-solid state secondary battery was produced as follows.

(Preparation of inorganic solid electrolyte-containing composition 201)

60 g of beads of zirconia beads having a diameter of 5 mm were put into a 45 mL container made of zirconia (manufactured by FRITSCH), 8.43 g of LPS synthesized in the above Synthesis Example A, and 0.17 g of KYNAR FLEX 2500-20 (product name, PVdF-HFP: polyvinylidene fluoride - hexafluoropropylene copolymer, manufactured by Arkema S.A.) in terms of a solid content mass and 16 g of butyl butyrate as the dispersion medium were put into the above container. Then, this container was set in a planetary ball mill P-7 (product name) manufactured by FRITSCH. Mixing was carried out at a temperature of 25°C and a rotation speed of 150 rpm for 10 minutes to prepare an inorganic solid electrolyte-containing composition (slurry) 201.

(Production of solid electrolyte sheet 201 for all-solid state secondary battery)

Using a baker type applicator (product name: SA-201, manufactured by Tester Sangyo Co., Ltd.), the inorganic solid electrolyte-containing composition 201 was applied on an aluminum foil having a thickness of 20 μm, and heating was carried out at 80°C for 2 hours to dry (remove the dispersion medium) the inorganic solid electrolyte-containing composition. Then, using a heat press machine, the inorganic solid electrolyte-containing composition dried at a temperature of 120°C and a pressure of 40 MPa for 10 seconds was heated and pressurized to produce a solid electrolyte sheet 201 for an all-solid state secondary battery. The film thickness of the solid electrolyte layer was 48 μm.

(Manufacturing of all-solid state secondary batteries for evaluation of positive electrode sheets Nos. 101 to 106, 113 to 116, and c11 for all-solid state secondary battery)

An all-solid state secondary battery No. 101 having a layer configuration illustrated in Fig. 1 was manufactured as follows.

The positive electrode sheet No. 101 for an all-solid state secondary battery (the aluminum foil of the solid electrolyte-containing sheet had been peeled off), which has the solid electrolyte layer obtained above, was cut out into a disk shape having a diameter of 14.5 mm and placed, as illustrated in Fig. 2, in a stainless 2032-type coin case 11 into which a spacer and a washer (not illustrated in Fig. 2) had been incorporated. Next, a lithium foil cut out in a disk shape having a diameter of 15 mm was overlaid on the solid electrolyte layer. After further overlaying a stainless steel foil thereon, the 2032-type coin case 11 was crimped to manufacture a (coin-type) all-solid state secondary battery (half cell) 13 (No. 101), illustrated in Fig. 2. The all-solid state secondary battery No. 101 for evaluation of positive electrode sheet No. 101 for an all-solid state secondary battery, manufactured in this manner, has a layer configuration illustrated in Fig. 1 (however, the lithium foil corresponds to a negative electrode active material layer 2 and a negative electrode collector 1).

Each of all-solid state secondary batteries (half cells) Nos. 102 to 106, 113 to 116, and c101 for evaluation of positive electrode sheets Nos. 102 to 106, 113 to 116, and c11 for an all-solid state secondary battery were manufactured in the same manner as in the manufacturing of the all-solid state secondary battery No. 101, except that in the manufacturing of the all-solid state secondary battery No. 101, a positive electrode sheet for an all-solid state secondary battery, which has a solid electrolyte layer and is indicated by Sheet No. shown in the column of "Electrode active material layer" of Table 4 was used instead of the positive electrode No. 101 for a secondary battery, which has a solid electrolyte layer.

(Manufacturing of all-solid state secondary batteries for evaluation of negative electrode sheets Nos. 107 to 112, 117 to 120, and c21 to c23 for all-solid state secondary battery)

An all-solid state secondary battery No. 107 having a layer configuration illustrated in Fig. 1 was manufactured as follows.

The negative electrode sheet No. 107 for an all-solid state secondary battery (the aluminum foil of the solid electrolyte-containing sheet had been peeled off), which has the solid electrolyte layer obtained above, was cut out into a disk shape having a diameter of 14.5 mm and placed, as illustrated in Fig. 2, in a stainless 2032-type coin case 11 into which a spacer and a washer (not illustrated in Fig. 2) had been incorporated. Next, a positive electrode sheet (a positive electrode active material layer) punched out from the positive electrode sheet CS for an all-solid state secondary battery produced below into a disk shape having a diameter of 14.0 mm was overlaid on the solid electrolyte layer. A stainless steel foil (a positive electrode collector) was further layered thereon to form a laminate 12 for an all-solid state secondary battery (a laminate consisting of stainless steel foil - aluminum foil - positive electrode active material layer

- solid electrolyte layer - negative electrode active material layer - copper foil). Then, the 2032-type coin case 11 was crimped to manufacture an all-solid state secondary battery (half cell) No. 107 for evaluation of negative electrode No. 107 for a secondary battery, illustrated in Fig. 2.

A positive electrode sheet CS for an all-solid state secondary battery to be used in the manufacturing of the all-solid state secondary battery No. 107 was prepared as follows.

(Preparation of positive electrode composition)

180 beads of zirconia beads having a diameter of 5 mm were put into a 45 mL container made of zirconia (manufactured by FRITSCH), 2.7 g of LPS synthesized in the above Synthesis Example A, and 0.3 g of KYNAR FLEX 2500-20 (product name, PVdF-HFP: polyvinylidene fluoride - hexafluoropropylene copolymer, manufactured by Arkema S.A.) in terms of a solid content mass and 22 g of butyl butyrate were put into the above container. The container was set in a planetary ball mill P-7 (product name, manufactured by FRITSCH) and the components were stirred for 60 minutes at 25°C and a rotation speed of 300 rpm. Then, 7.0 g of $LiNi_{1/3}Co_{1/3}Mn_{1/3}O_2$ (NMC, specific surface area: 13 $m^2/g$, average particle diameter: 0.3 μm)) was put into the container as the positive electrode active material, and similarly, the container was set in a planetary ball mill P-7, mixing was continued at 25°C and a rotation speed of 100 rpm for 5 minutes to prepare a positive electrode composition CS.

(Production of positive electrode sheet CS for all-solid state secondary battery)

The positive electrode composition CS obtained as described above was applied onto an aluminum foil (a positive electrode collector) having a thickness of 20 μm with a baker type applicator (product name: SA-201, manufactured by Tester Sangyo Co., Ltd.), heating was carried out at 100°C for 2 hours to dry (to remove the dispersion medium) the positive electrode composition CS. Then, using a heat press machine, the dried positive electrode composition was pressurized (10 MPa, 1 minute) at 25°C to produce each of positive electrode sheets CS for an all-solid state secondary battery, having a positive electrode active material layer having a film thickness of 75 μm.

Each of all-solid state secondary batteries (full cells) Nos. 108 to 112, 117 to 120, and c201 to c203 for evaluation of negative electrode sheets Nos. 108 to 112, 117 to 120, and c21 to c23 for an all-solid state secondary battery were manufactured in the same manner as in the manufacturing of the all-solid state secondary battery No. 107, except that in the manufacturing of the all-solid state secondary battery No. 107, a negative electrode sheet for an all-solid state secondary battery, which has a solid electrolyte layer and is indicated by Sheet No. shown in the column of "Electrode active material layer" of Table 4 was used instead of the negative electrode sheet No. 107 for an all-solid state secondary battery, which has a solid electrolyte layer.

<Evaluation 3: Cycle characteristic test under high-speed charging and discharging conditions>

The discharge capacity retention rate of each of the all-solid state secondary batteries for evaluation manufactured as described above was measured using a charging and discharging evaluation device TOSCAT-3000 (product name, manufactured by Toyo System Corporation).

Specifically, each of the all-solid state secondary batteries for evaluation was charged in an environment of 25°C at a current density of 0.1 $mA/cm^2$ until the battery voltage reached 3.6 V. Then, the battery was discharged at a current density of 0.1 $mA/cm^2$ until the battery voltage reached 2.5 V. One charging operation and one discharging operation were set as one cycle of charging and discharging, and 3 cycles of charging and discharging were repeated under the same conditions to carry out initialization. Next, the battery was subjected to high-speed charging at a current density of 1.0 $mA/cm^2$ until the battery voltage reached 3.6 V. Then, the battery was subjected to high-speed discharging at a current density of 1.0 $mA/cm^2$ until the battery voltage reached 2.5 V. One high-speed charging and one high-speed discharging were set as one high-speed charging and discharging cycle, and high-speed charging and discharging was repeated under the same conditions. The discharge capacity of each of the all-solid state secondary batteries for evaluation was measured at each time after the high-speed charging and discharging cycle was carried out with a charging and discharging evaluation device: TOSCAT-3000 (product name).

In a case where the discharge capacity (the initial discharge capacity) of the first high-speed charging and discharging cycle after initialization is set to 100%, the cycle characteristics were evaluated by determining where the number of high-speed charging and discharging cycles in a case where the discharge capacity retention rate (the discharge capacity with respect to the initial discharge capacity) reaches 80% is included in any of the following evaluation standards.

In this test, the evaluation standard "D" or higher is the pass level, the higher the evaluation standard is, the better the cycle characteristics are, and the initial battery performance can be maintained even in a case where a plurality of times of high-speed charging and discharging are repeated (even in a case of the long-term use). The results are

shown in Table 4. Although the all-solid state secondary batteries c101 and c201 are included in the evaluation standard "E", the number of high-speed charging and discharging cycles are respectively 210 cycles and 106 cycles.

All of the all-solid state secondary batteries for evaluation according to the embodiment of the present invention exhibited the discharge capacity values at the first cycle of the high-speed charging and discharging, which are sufficient for functioning as an all-solid state secondary battery. Moreover, the all-solid state secondary battery for evaluation according to the embodiment of the present invention maintained excellent cycle characteristics even in a case where the general charging and discharging cycle was repeatedly carried out under the same conditions as those in the above-described initialization instead of those in the high-speed charging and discharging.

- Evaluation standard (half cell) -

A: 600 cycles or more
B: 500 cycles or more and less than 600 cycles
C: 400 cycles or more and less than 500 cycles
D: 300 cycles or more and less than 400 cycles
E: 200 cycles or more and less than 300 cycles
F: Less than 200 cycles

- Evaluation standard (full cell) -

A: 500 cycles or more
B: 400 cycles or more and less than 500 cycles
C: 300 cycles or more and less than 400 cycles
D: 200 cycles or more and less than 300 cycles
E: 100 cycles or more and less than 200 cycles
F: Less than 100 cycles

[Table 4]

| Battery No. | Layer Configuration | | Cycle Characteristics | Note |
|---|---|---|---|---|
| | Electrode Active Material Layer (Sheet No.) | Solid Electrolyte Layer (Sheet No.) | | |
| 101 | 101 | 201 | D | Present invention |
| 102 | 102 | 201 | D | Present invention |
| 103 | 103 | 201 | C | Present invention |
| 104 | 104 | 201 | B | Present invention |
| 113 | 113 | 201 | B | Present invention |
| 105 | 105 | 201 | B | Present invention |
| 114 | 114 | 201 | B | Present invention |
| 115 | 115 | 201 | B | Present invention |

(continued)

| Battery No. | Layer Configuration | | Cycle Characteristics | Note |
|---|---|---|---|---|
| | Electrode Active Material Layer (Sheet No.) | Solid Electrolyte Layer (Sheet No.) | | |
| 116 | 116 | 201 | B | Present invention |
| 106 | 106 | 201 | A | Present invention |
| c101 | c11 | 201 | E | Comparative Example |
| 107 | 107 | 201 | D | Present invention |
| 108 | 108 | 201 | D | Present invention |
| 109 | 109 | 201 | C | Present invention |
| 110 | 110 | 201 | B | Present invention |
| 117 | 117 | 201 | B | Present invention |
| 111 | 111 | 201 | B | Present invention |
| 118 | 118 | 201 | B | Present invention |
| 119 | 119 | 201 | B | Present invention |
| 120 | 120 | 201 | B | Present invention |
| 112 | 112 | 201 | A | Present invention |
| c201 | c21 | 201 | E | Comparative Example |
| c202 | c22 | 201 | F | Comparative Example |
| c203 | c23 | 201 | F | Comparative Example |

The following findings can be seen from the results of Table 3 and Table 4.

The electrode composition shown in Comparative Examples PKc11 and NKc21 to NKc23, which do not contain a sulfide-based inorganic solid electrolyte in combination with the active material and the polymer binder specified in the present invention, are inferior in dispersion stability. The sheets c11 and c21 to c23 produced by using these compositions are inferior in adhesiveness to the collector, and the discharge capacities of the all-solid state secondary batteries c101 and c201 to c203 are significantly reduced by high-speed charging and discharging.

On the other hand, in all of the electrode composition shown in PK-1 to PK-10 and NK-1 to NK-10 according to the embodiment of the present invention, which contain a sulfide-based inorganic solid electrolyte in combination with the active material and the polymer binder specified in the present invention, temporal reaggregation or sedimentation can be suppressed even in a case of containing an active material having a large specific surface area, and sufficient dispersibility is maintained even after 4 days. In a case of using these electrode compositions for forming an active

material layer of an all-solid state secondary battery, it is possible to enhance the collector adhesiveness of the electrode sheet for an all-solid state secondary battery, and it is possible to suppress the decrease in discharge capacity even in the high-speed charging and discharging, whereby it is possible to realize an all-solid state secondary battery that exhibits excellent cycle characteristics. It is conceived that this action and effect is exhibited by the polymer binder being adsorbed to the active material and further to the sulfide-based inorganic solid electrolyte in the electrode composition containing an active material having a large specific surface area.

The present invention has been described together with the aspects of the present invention. However, the inventors of the present invention do not intend to limit the present invention in any part of the details of the description unless otherwise designated, and it is conceived that the present invention should be broadly construed without departing from the spirit and scope of the invention shown in the attached "WHAT IS CLAIMED IS".

This application claims priority based on JP2020-055342 filed in Japan on March 26, 2020, which is incorporated herein by reference as a part of the description of the present specification.

Explanation of References

1: negative electrode collector
2: negative electrode active material layer
3: solid electrolyte layer
4: positive electrode active material layer
5: positive electrode collector
6: operation portion
10: all-solid state secondary battery
11: 2032-type coin case
12: laminate for all-solid state secondary battery
13: coin-type all-solid state secondary battery

## Claims

**1.** An electrode composition for an all-solid state secondary battery, comprising:

a sulfide-based inorganic solid electrolyte having an ion conductivity of a metal belonging to Group 1 or Group 2 in the periodic table;
a polymer binder;
an active material; and
a dispersion medium,
wherein the active material has a specific surface area of 10 $m^2/g$ or more, and
a polymer that forms the polymer binder has a constitutional component derived from a (meth)acrylic monomer or vinyl monomer, which has an SP value of 19.0 $MPa^{1/2}$ or more.

**2.** The electrode composition according to claim 1,
wherein the polymer binder is dissolved in the dispersion medium.

**3.** The electrode composition according to claim 1 or 2,
wherein the active material has a silicon element as a constitutional element.

**4.** The electrode composition according to any one of claims 1 to 3,
wherein the constitutional component has a polar group containing active hydrogen, or a heterocyclic group.

**5.** The electrode composition according to any one of claims 1 to 4,
wherein the constitutional component has a structure represented by Formula (M1) or Formula (M2),

Formula (M1)

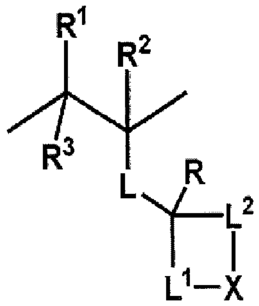

Formula (M2)

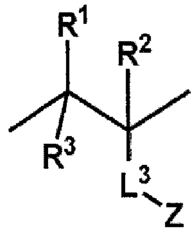

in Formula (MI) and Formula (M2), R, $R^1$, $R^2$, and $R^3$ represent a hydrogen atom or a substituent,

L represents a linking group, $L^1$, $L^2$, and $L^3$ represent a single bond or a linking group,
X represents -O-, -S-, or -$NR^M$-, where $R^M$ represents a hydrogen atom or a substituent, and
Z represents -OH or -COOH.

**6.** The electrode composition according to any one of claims 1 to 5,
wherein a polymer that forms the polymer binder is a (meth)acrylic polymer or a vinyl polymer.

**7.** The electrode composition according to any one of claims 1 to 6, further comprising a conductive auxiliary agent.

**8.** An electrode sheet for an all-solid state secondary battery, comprising a layer formed of the electrode composition according to any one of claims 1 to 7, on a surface of a collector.

**9.** An all-solid state secondary battery comprising, in the following order:

a positive electrode active material layer;
a solid electrolyte layer; and
a negative electrode active material layer,
wherein at least one layer of the positive electrode active material layer or the negative electrode active material layer is formed of the electrode composition according to any one of claims 1 to 7.

**10.** A manufacturing method for an electrode sheet for an all-solid state secondary battery, comprising forming a film of the electrode composition according to any one of claims 1 to 7, on a surface of a collector.

**11.** A manufacturing method for an all-solid state secondary battery, comprising manufacturing an all-solid state secondary battery through the manufacturing method according to claim 10.

FIG. 1

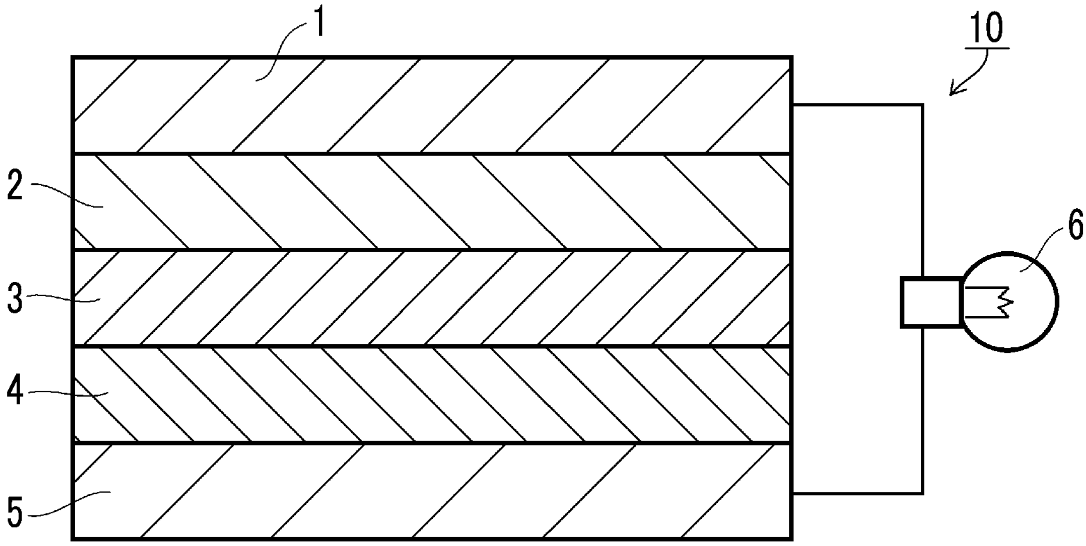


FIG. 2

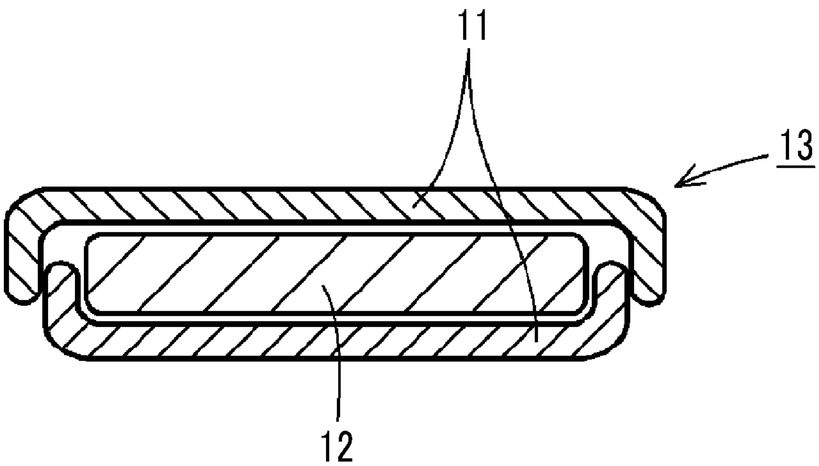

## INTERNATIONAL SEARCH REPORT

International application No. PCT/JP2021/012346

A. CLASSIFICATION OF SUBJECT MATTER

H01M 4/134(2010.01)i; H01M 4/1395(2010.01)i; H01M 4/38(2006.01)i; H01M 4/62(2006.01)i; H01M 10/052(2010.01)i; H01M 10/0562(2010.01)i

FI: H01M4/134; H01M10/0562; H01M4/62 Z; H01M4/38 Z; H01M4/1395; H01M10/052

According to International Patent Classification (IPC) or to both national classification and IPC

B. FIELDS SEARCHED

Minimum documentation searched (classification system followed by classification symbols)

H01M4/134; H01M4/1395; H01M4/38; H01M4/62; H01M10/052; H01M10/0562

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2017/099247 A1 (FUJIFILM CORPORATION) 15 June 2017 (2017-06-15) paragraphs [0014], [0027], [0060]-[0061], [0070], [0108] | 1-11 |
| Y | JP 2019-186212 A (MITSUI MINING & SMELTING CO., LTD.) 24 October 2019 (2019-10-24) paragraph [0043] | 1-11 |
| A | WO 2019/054191 A1 (FUJIFILM CORPORATION) 21 March 2019 (2019-03-21) paragraphs [0007]-[0008] | 1-11 |

☐ Further documents are listed in the continuation of Box C.    ☒ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 26 May 2021 (26.05.2021) | 08 June 2021 (08.06.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/012346

| Patent Documents referred in the Report | Publication Date | Patent Family | Publication Date |
|---|---|---|---|
| WO 2017/099247 A1 | 15 Jun. 2017 | US 2018/0277892 A1 paragraphs [0036], [0070]-[0071], [0146]-[0149], [0169], [0259]-[0260], [0274]-[0275]<br>EP 3389128 A1<br>KR 10-2018-0083945 A<br>CN 108432024 A | |
| JP 2019-186212 A | 24 Oct. 2019 | (Family: none) | |
| WO 2019/054191 A1 | 21 Mar. 2019 | US 2020/0212482 A1 paragraphs [0011]-[0038]<br>EP 3683883 A1<br>KR 10-2020-0036918 A<br>CN 111066189 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019186212 A
- JP 62022066 A
- JP 2006856 A
- JP H26856 A
- JP 3045473 A
- JP H345473 A
- JP 5090844 A
- JP H590844 A
- JP 6004516 A
- JP H64516 A
- JP 201588486A B
- JP 6295332 B
- JP 2015088486 A
- JP 2020055342 A

### Non-patent literature cited in the description


- **H. L. HOY.** *JOURNAL OF PAINT TECHNOLOGY,* 1970, vol. 42 (541), 76-118
- POLYMER HANDBOOK. vol. VII, 686
- **T. OHTOMO ; A. HAYASHI ; M. TATSUMISAGO ; Y. TSUCHIDA ; S. HAMA ; K. KAWAMOTO.** *Journal of Power Sources,* 2013, vol. 233, 231-235
- **A. HAYASHI ; S. HAMA ; H. MORIMOTO ; M. TATSUMISAGO ; T. MINAMI.** *Chem. Lett.,* 2001, 872-873